# NEW EUROPEAN PATENT SPECIFICATION

(11) **EP 3 590 896 B2**
(45) Date of publication and mention of the opposition decision: **14.10.2026**
(45) Mention of the grant of the patent: 06.12.2023
(21) Application number: 19171165.4
(22) Date of filing: 25.04.2019
(51) Int. Cl.: C03B 23/045, C03B 23/09

(54) **GLASS CONTAINER WITH AN IMPROVED BOTTOM GEOMETRY**
GLASBEHÄLTER MIT EINER VERBESSERTEN BODENGEOMETRIE
RÉCIPIENT EN VERRE AVEC GÉOMÉTRIE DE FOND AMÉLIORÉE

(30) Priority: 18.05.2018 EP 18173310
(43) Date of publication of application: 08.01.2020
(73) Proprietor: SCHOTT Pharma AG & Co. KGaA, 55122 Mainz (DE)
(72) Inventor: Langsdorf, Andreas, 55218 Ingelheim (DE); Thomas, Peter, 56073 Koblenz (DE); Maurer, Florian, 64347 Griesheim (DE); Kummer, Hanspeter, 79379 Müllheim (DE); Mutlu, Fatih, 79395 Neuenburg (DE)
(74) Representative: Herzog IP Patentanwalts GmbH

(56) References cited:
- WO-A2-2006/127843
- DE-C- 689 280
- DE-C- 977 540
- US-A1- 2003 198 577
- US-A1- 2004 007 280
- US-B2- 6 551 672

## Description

The present invention relates to a glass container comprising as container parts
i) a glass tube with a first end and a further end, the glass tube having a wall thickness d_{w} and an outer diameter d_{c};
ii) a glass bottom, wherein the glass bottom closes the glass tube at the first end;
iii) a curved glass heel extending from an outer area of the glass bottom to the first end of the glass tube;
wherein the curved glass heel is defined by an outer radius (rₒ), an inner radius (rᵢ) and a thickness of the glass (dₕ) in the curved glass heel and wherein the following condition is fulfilled: $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 0.75 mm .$

Further, the invention relates to a process for the preparation of a closed glass container, to a closed glass container obtainable by this process and the use of a glass container for packaging a pharmaceutical composition.

In the pharmaceutical industry, containers are used for the primary packaging of drugs. Among the traditionally most used materials is a glass container, as it ensures stability, visibility, endurance, rigidity, moisture resistance, ease of capping, and economy. The glass containers for medicinal purposes currently on the market include glass containers, made from glass tubing and blow-molded glass containers. The manufacturing methods for tubing-based glass containers and blow-molded glass containers are widely known. Tubing based glass containers are made from prefabricated glass tubing (mother tube) by shaping and separation. In a typical manufacturing process, a glass tube is loaded into the head of a rotary machine, and then, while rotating around its major axis, the tube is heated to its softening point by a flame and is pulled along its major axis for stretching and spreading the portion that has been subjected to heat softening to create and shape the bottom of the desired container. Tubular glass containers include vials, ampoules, bottles, cylindrical injector and syringe bodies, whose shape and size are standard. Blow-molded glass containers are made by shaping a glass melt directly by blowing or press-and-blow processes. The blow-molded glass containers include, for example, spray and infusion bottles, such as those described in DE 196 22 550 A1. However blow-molded glass containers do typically have much higher tolerances in the wall thickness including local sections with higher and lower wall thicknesses. Due to refraction of light they are typically not suitable for optical inspection of a filled container through the glass wall, what renders them unsuitable for many pharmaceutical applications.

Pharmaceutical vials made from a tube are usually manufactured according to existing ISO-standards ("ISO-vials"). These ISO-standards are usually based on a defined thickness of the tube wall defining the thickness of the cylindrical body. In the reshaped areas (i. e. the curved areas surrounding the bottom of the glass containers and forming the "heel" of a glass container) wall thicknesses can occur that deviate from the thickness of the tube wall. The ISO-standards take into account these facts by specifying a minimum thickness of the glass bottom. In case of a vial with a size designation "2R" according to DIN EN ISO 8362-1:2016-06 the minimum thickness of the glass bottom is 0.6 mm (i. e. 60 % of the thickness of the glass tube). Actually, the thickness of the glass bottom is within a range between the minimum value required by the ISO-standards and the wall thickness of the mother tube. The thickness in the radius region of the bottom, which has arisen from bending over from the mother tube for the formation of the bottom, is usually very close to the wall thickness of the mother tube. The internal geometries, such as the glass thickness and the inner radius in the ground heel, are usually not specified. The inner radius is usually determined by the outer radius and the wall thickness in the radius region, which in turn basically corresponds to the wall thickness of the mother tube.

The above described pharmaceutical glass containers should be characterized by sufficiently high strength, particularly if they are filled in automated capping machines in which substantial axial loads are applied to the vials. Higher axial loads may also be observed when glass vials are used in automated sampling machines in scientific laps or medical institutions as well as during stoppering, shipping, and storage of glass vials. In addition to a certain resistance to axial loads glass containers should also display sufficiently high burst strength. Burst pressure testing is, for example, appropriate for assessing container strength during lyophilisation to find the weakest point on the interior or exterior surface of a container. Burst strength of pharmaceutical glass containers becomes important if pharmaceutical preparations, after they have been filled in a glass container, are subjected to lyophilisation.

As the use of glass containers in pharmaceutical industry only allows a very low failure probability upon application of mechanical stress or pressure changes, glass containers intended for the filling of pharmaceutical preparations should therefore be characterized by sufficiently high strength, particularly by the ability to withstand high axial loads and by sufficiently high burst strength. Although ISO-vials are already adapted to these increased stability requirements, the strength of glass containers can be further improved. For example, to increase the strength of glass containers the glass surface of the containers can be hardened, for example by means of chemical treatments as disclosed in WO 1981/002572 A1 or in EP 0 495 936 A1. However, such a hardening process requires an additional process step in the manufacturing of glass containers and - in case of chemical treatments - also leads to a modification of the glass surface. Therefore, a chemically strengthened glass surface typically requires a new approval of the glass container.

US 2004/0007280 A1 discloses a tube blank for producing glass receptacles, in particular glass tube vials, glass ampules, or glass syringes, having a tube wall, including a first end region and a second end region, wherein the first end region is sealed to form a floor and a ventilation hole is introduced into the tube wall in the region of the end region. The tube blank is characterized in that the tube end characterizing the second end region has an opening.

WO 2006/127843 A2 discloses a method for making a vial from a pre-form having interior and exterior base portions and an interior and exterior side wall. The method comprising the steps heating the pre-form to a temperature at or above the lowest temperature at which the pre-form flows, contacting the interior base portion with a mandrel, shaping the exterior side wall of the pre-form with at least one roller and forming a finished exterior base portion of the vial with base forming means when the pre-from is at or above the temperature achieved in said heating step to form the finished vial base.

DE 997 540 C discloses a method for the manufacture of medicine jars and bottles by machine blowing out a softened melted glass tube end opposite a pressure plate and a profiled shaping roller. An inclined surface extending approximately at an angle of 45° is moulded onto the flat or only slightly concave standing surface of the central base part at the transition between the standing surface and the cylindrical outer surface of the glass tube end in such a way that the transition effects the formation of an internally rounded base.

DE 689 280 C discloses a process for vacuum leaching by means of leaching agents which generate gases. In this process, before the leaching liquid is introduced into the leaching vessel, the air void is eliminated by admitting previously deaerated water vapour, thereby bringing the pressure in the leaching vessel to the pressure of the upper atmosphere in order to avoid the penetration of the gases generated by the leaching agent into the air void cavities of the leached material.

In general, it is an object of the present invention to at least partly overcome a disadvantage arising from the prior art. It is a further object of the invention to provide a glass container for pharmaceutical packaging which has an improved burst strength, particularly compared to the ISO-vials known from the prior art. It is a further object of the invention to provide a glass container for pharmaceutical packaging which has an improved burst strength, particularly compared to the ISO-vials known from the prior art, and which is also characterized by sufficiently high resistance to axial loads. It is a further object of the invention to provide a glass container for pharmaceutical packaging which has an improved burst strength and preferably also sufficiently high resistance to axial loads, particularly compared to the ISO-vials known from the prior art, and which has been prepared by a process as simple as possible, preferably from prefabricated glass tubing by shaping and separation. It is a further object of the invention to provide a process for the preparation of a glass container for pharmaceutical packaging which has an improved burst strength, particularly compared to the ISO-vials known from the prior art, from prefabricated glass tubing by shaping and separation, wherein no additional process steps such as a modification of the glass surface or the thickening of the glass bottom by applying an additional mass of glass onto the glass bottom are required. It is a further object of the invention to provide a glass container for pharmaceutical packaging which is based on glass tubing and suitable for optical inspection through the glass wall. It is a further object of the invention to provide a glass container for pharmaceutical packaging which is not increased in weight compared to typical ISO-vials having the same interior volume for more than 50%, preferably not more than 25%.

A contribution to at least partly solving at least one, preferably more than one, of the above objects is made by the independent claims. The dependent claims provide preferred embodiments which contribute to at least partly solving at least one of the objects.

A contribution to solving at least one of the objects according to the invention is made by an embodiment 1 of a glass container 1 as defined in claim 1

Preferably, $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 1.00 mm ,$ even more preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 1.50 mm$ and most preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 2.00 mm .$

In an embodiment 2 of the glass container 1, the glass container 1 is designed according to its embodiment 1, wherein d_{w} is in the range from 0.8 to 1.2 mm, even more preferably in the range from 0.9 to 1.1 mm and most preferably in the range from 0.95 to 1.05 mm.

In an embodiment 3 of the glass container 1, the glass container 1 is designed according to its embodiment 1 or 2, wherein dₕ is in the range from 1.15 to 2.5 mm, even more preferably in the range from 1.3 to 2.0 mm and most preferably in the range from 1.4 to 1.9 mm.

In an embodiment 4 of the glass container 1, the glass container 1 is designed according to any of its embodiments 1 to 3, wherein rₒ is in the range from 0.5 to 4.0 mm, preferably in the range from 1.1 to 3.0 mm, more preferably in the range from 1.2 to 2.5 mm, even more preferably in the range from 1.3 to 2.0 mm and most preferably in the range from 1.4 to 1.7 mm.

In an embodiment 5 of the glass container 1, the glass container 1 is designed according to any of its embodiments 1 to 4, wherein rᵢ is in the range from 0.8 to 2.5 mm, even more preferably in the range from 0.85 to 2.0 mm and most preferably in the range from 0.9 to 1.6 mm.

In an embodiment 6 of the glass container 1 according to the invention, the glass container 1 is designed according to any of its embodiments 1 to 5, wherein the following condition is fulfilled: ${r}_{i} > 0.7 mm .$

Preferably, rᵢ is > 0.8 mm,
more preferably rᵢ > 0.9 mm,
even more preferably rᵢ > 1.0 mm and
most preferably rᵢ > 1.2 mm.

In an embodiment 7 of the glass container 1, the glass container 1 is designed according to any of its embodiments 1 to 6, wherein d_{c} is in the range from 15 to 35 mm, even more preferably in the range from 15 to 30 mm and most preferably in the range from 15 to 20 mm.

In an embodiment 8 of the glass container 1 according to the invention, the glass container 1 is designed according to any of its embodiments 1 to 7, wherein the following condition is fulfilled: ${r}_{i} + {d}_{h} - {r}_{o} > 0 mm .$

Preferably, $_ {r}_{i} + {d}_{h} - {r}_{o} {is}_{¯} > 0.1 mm ,$ more preferably ${r}_{i} + {d}_{h} - {r}_{o} > 0.25 mm ,$ even more preferably ${r}_{i} + {d}_{h} - {r}_{o} > 0.5 mm$ and most preferably ${r}_{i} + {d}_{h} - {r}_{o} > 0.75 mm .$

In an embodiment 9 of the glass container 1, the glass container 1 is designed according to any of embodiments 1 to 8, wherein the following condition is fulfilled: ${r}_{o} < 3.0 \times {d}_{w} ,$ preferably ${r}_{o} < 2.0 \times {d}_{w} ,$ more preferably ${r}_{o} < 1.5 \times {d}_{w} ,$ even more preferably ${r}_{o} < 1.25 \times {d}_{w}$ and most preferably ${r}_{o} < 1.0 \times {d}_{w} .$

In an embodiment 10 of the glass container 1, the glass container 1 is designed according to any of its embodiments 1 to 9, wherein the following condition is fulfilled: ${d}_{h} > 1.05 \times {d}_{w} ,$ preferably ${d}_{h} > 1.15 \times {d}_{w} ,$ more preferably ${d}_{h} > 1.25 \times {d}_{w} ,$ even more preferably ${d}_{h} > 1.4 \times {d}_{w}$ and
most preferably ${d}_{h} > 1.6 \times {d}_{w} .$

In an embodiment 11 of the glass container 1, the glass container 1 is designed according to any of its embodiments 1 to 10, wherein glass at the centre of the glass bottom has a thickness d_{cgb} and wherein the following condition is fulfilled: ${d}_{h} - {d}_{cgb} > 0.5 mm ,$ preferably ${d}_{h} - {d}_{cgb} > 1.0 mm ,$ more preferably ${d}_{h} - {d}_{cgb} > 1.5 mm ,$ even more preferably ${d}_{h} - {d}_{cgb} > 2.0 mm$ and
most preferably ${d}_{h} - {d}_{cgb} > 3.0 mm .$

In an embodiment 12 of the glass container 1, the glass container 1 is designed according to embodiment 11, wherein d_{cgb} is in the range from 0.6 to 2.5 mm, preferably in the range from 1.0 to 2.0 mm, more preferably in the range from 1.05 to 1.7 mm, even more preferably in the range from 1.1 to 1.6 mm and most preferably in the range from 1.2 to 1.5 mm.

In an embodiment 13 of the glass container 1, the glass container 1 is designed according to any of its embodiments 1 to 12, wherein the glass container 1 is a tubular glass container glass container prepared from prefabricated glass tubing by shaping and separation.

In an embodiment 14 of the glass container 1 according to the invention, the glass container 1 is designed according to any of its embodiments 1 to 13, wherein the glass container is thermally tempered, chemically tempered or both.

In an embodiment 15 of the glass container 1 according to the invention, the glass container 1 is designed according to any of its embodiments 1 to 14, wherein the glass tube is a cylindrical glass tube and wherein the glass bottom is a circular glass bottom.

In an embodiment 16 of the glass container 1 according to the invention, the glass container 1 is designed according to its embodiment 15, wherein the circular glass bottom has a thickness that varies within the area from the centre of the circular glass bottom to the outer area of the circular glass bottom, wherein the minimum glass thickness of the circular glass bottom is d_{b,min} and wherein the following condition is fulfilled: ${d}_{h} / {d}_{b . min} < 3.0 .$

Preferably, ${d}_{h} / {d}_{b , min} {is}_{¯} < 2.5 ,$ more preferably ${d}_{h} / {d}_{b , min} < 2.0 ,$ even more preferably ${d}_{h} / {d}_{b , min} < 1.6$ and
most preferably ${d}_{h} / {d}_{b , min} < 1.2 .$

In an embodiment 17 of the glass container 1, the glass container 1 is designed according to its embodiment 16, wherein d_{b,min} is in the range from 0.6 to 3.0 mm, preferably in the range from 0.8 to 2.5 mm, more preferably in the range from 1.0 to 2.0 mm, even more preferably in the range from 1.2 to 1.8 mm and most preferably in the range from 1.4 to 1.7 mm.

In an embodiment 18 of the glass container 1, the glass container 1 is designed according to any of its embodiments 15 to 17, wherein a contour of the cross section of the circular glass bottom on the side directed to the interior side of the glass container 1 over whole diameter of the circular glass bottom is characterized by not more than two inflection points.

In an embodiment 19 of the glass container 1, the glass container 1 is designed according to any of its embodiments 15 to 18, wherein the circular bottom is characterized by a bottom diameter d_{bottom}, wherein ${d}_{bottom} = {d}_{outer} - 2 \times {r}_{o} ,$ wherein dₒᵤₜₑᵣ corresponds to the outer diameter of the glass tube measured at the first end of the glass tube and wherein d_{bottom} is in the range from 10 to 50 mm, preferable in the range from 12 to 30 mm and more preferably in the range from 13 to 25 mm.

In an embodiment 20 of the glass container 1, the glass container 1 is designed according to any of its embodiments 1 to 19, wherein the outer surface of the curved glass heel has the form of a circular arc Iₒ and wherein Iₒ has a length of 2×π×rₒ/4.

In an embodiment 21 of the glass container 1, the glass container 1 is designed according to any of its embodiments 1 to 20, wherein the outer surface of the curved glass heel has the form of a circular arc Iₒ and wherein Iₒ has a length in the range from (50°/360°)×2π×rₒ to (80°/360°)×2π×rₒ, more preferably in the range from (60°/360°)×2π×rₒ to (80°/360°)×2π×rₒ.

In an embodiment 22 of the glass container 1, the glass container 1 is designed according to any of its embodiments 1 to 21, wherein the following condition is fulfilled: $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) < 20 mm ,$ preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) < 10 mm ,$ and
more preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) < 5 mm .$

In an embodiment 23 of the glass container 1 according to the invention, the glass container 1 is designed according to any of its embodiments 1 to 22, wherein the glass container 1 comprises a top region in which the inner diameter is dₜ and a body region in which the inner diameter of the glass tube is d_{b}, wherein d_{b} > dₜ and wherein the glass container 1 comprises a shoulder that connects the body region with the top region, wherein shoulder is characterized by a shoulder angle α and wherein α is in the range from 10 to 70°.

Preferably, α is in the range from 25 to 60°, more preferably in the range from 33 to 55°, even more preferably in the range from 37 to 50° and most preferably in the range from 38° to 45°.

In an embodiment 24 of the glass container 1, the glass container 1 is designed according to its embodiment 23, wherein the glass container in the container part from the glass bottom up to the shoulder is rotation-symmetric around the longitudinal axis that goes perpendicular through the centre of the glass bottom.

In an embodiment 25 of the glass container 1, the glass container 1 is designed according to its embodiment 23 or 24, wherein dₜ is in the range from 5 to 20 mm, preferably in the range from 7 to 14 mm and more preferably in the range from 6 to 8 mm.

In an embodiment 26 of the glass container 1, the glass container 1 is designed according any of its embodiments 23 to 25, wherein d_{b} is in the range from 10 to 60 mm, preferably in the range from 12 to 50 mm, more preferably in the range from 12 to 30 mm, even more preferably in the range from 12 to 25 mm and most preferably in the range from 12 to 17 mm.

In an embodiment 27 of the glass container 1, the glass container 1 is designed according to any of its embodiments 23 to 26, wherein the glass in the shoulder has a thickness d, and wherein dₛ is in the range from 1.0 to 2.5 mm, preferably in the range from 1.1 to 2.0 mm, more preferably in the range from 1.2 to 1.9 mm, even more preferably in the range from 1.3 to 1.9 mm and most preferably in the range from 1.4 to 1.8 mm.

In an embodiment 28 of the glass container 1 according to the invention, the glass container 1 is designed according to any of its embodiments 23 to 27, wherein throughout the body region the wall thickness d_{w} of the glass tube is in a range from ± 0.2 mm, based on a mean value of this wall thickness in the body region.

Preferably, the wall thickness d_{w} of the glass tube is in a range from ± 0.1 mm, more preferably ± 0.08 mm and most preferably ± 0.05 mm, in each case based on a mean value of this wall thickness in the body region.

In an embodiment 29 of the glass container 1, the glass container 1 is designed according to any of its embodiments 1 to 28, wherein the glass container 1 has a mass of glass m_{g} and an interior volume Vᵢ and wherein the following condition is fulfilled: ${m}_{g} / {{V}_{i}}^{0.75} < 2.0 ,$ preferably ${m}_{g} / {{V}_{i}}^{0.75} < 1.75 .$

In an embodiment 30 of the glass container 1 according to the invention, the glass container 1 is designed according to any of its embodiments 1 to 29, wherein the glass container 1 has an interior volume Vᵢ in a range from 2 to 150 ml.

Preferably, Vᵢ is in a range from 3 to 100 ml, more preferably from 3 to 50 ml, even more preferably from 3 to 15 ml, most preferably from 3 to 7 ml.

In an embodiment 31 of the glass container 1, the glass container 1 is designed according to any of its embodiments 1 to 30, wherein the glass container 1 has a height h_{c} in the range from 15 to 100 mm, preferably in the range from 20 to 60 mm, more preferably in the range from 25 to 55 mm, even more preferably in the range from 30 to 50 mm and most preferably in the range from 34 to 46 mm.

In an embodiment 32 of the glass container 1, the glass container 1 is designed according to any of its embodiments 1 to 31, wherein at least one of the properties of the glass container 1 selected from the group consisting of rₒ (r₂), d_{w} (s₁), d_{c} (d₁), d_{b,min} (s₂, min) and h_{c} (h₁) is not within the requirements defined in DIN EN ISO 8362-1:2016-06 (the corresponding designation of properties rₒ, d_{w}, dₜ, d_{b}, d_{b,min} and h_{c} in DIN EN ISO 8362-1:2016-06 is indicated in the parenthesis).

In an embodiment 33 of the glass container 1, the glass container 1 is designed according to any of its embodiments 1 to 32, wherein the glass container 1 is a packaging container for a medical or a pharmaceutical packaging good or both. A preferred pharmaceutical packaging good is a pharmaceutical composition. Preferably, the glass container 1 is suitable for packaging parenteralia in accordance with section 3.2.1 of the European Pharmacopoeia, 7th edition from 2011.

In an embodiment 34 of the glass container 1, the glass container 1 is designed according to any of its embodiments 1 to 33, wherein the glass container 1 is a vial.

In an embodiment 35 of the glass container 1 according to the invention, the glass container 1 is designed according to any of its embodiments 1 to 34, wherein the glass is of a type selected from the group consisting of a borosilicate glass, an aluminosilicate glass, soda lime glass and fused silica. "Soda lime glass" according to the invention is an alkaline/alkaline earth/silicate glass according to table 1 of ISO 12775 (1^{st} edition 1997-10-15).

In an embodiment 36 of the glass container 1 according to the invention, the glass container 1 is designed according to any of its embodiments 1 to 35, wherein the glass container comprises a coating that at least partially superimposes the exterior surface, the interior surface or the exterior and the interior surface of the glass tube.

In an embodiment 37 of the glass container 1, the glass container 1 is designed according to its embodiment 36, wherein the coating comprises a silicone, a silane or a mixture thereof, wherein the silicone or the silane can be crosslinked or non-crosslinked.

Suitable silanes and silicones for treating the surface of glass containers are, for examples, disclosed in US 2011/0006028 A1, US 4,420,578 or in WO 2014/105350 A3.

In an embodiment 38 of the glass container 1, the glass container 1 is designed according to its embodiment 36, wherein the coating preferably comprises a coupling agent layer positioned on the exterior surface (i. e. the surface opposite to the interior surface that directed to the interior volume Vᵢ of the glass container) of the glass tube, the coupling agent layer comprising a coupling agent; and a polymer layer positioned over the coupling agent layer, the polymer layer comprising a polymer chemical composition. Preferably, the coating is a coating as described in US 2013/171456 A1.

In an embodiment 39 of the glass container 1, the glass container 1 is designed according to its embodiment 38, wherein the coating further comprises an interface layer positioned between the coupling agent layer and the polymer layer; and the interface layer comprises one or more chemical compositions of the polymer layer bound with one or more of the chemical compositions of the coupling agent layer.

In an embodiment 40 of the glass container 1, the glass container 1 is designed according to its embodiment 38 or 39, wherein the coupling agent comprises at least one of: a first silane chemical composition, a hydrolysate thereof, or an oligomer thereof; and a chemical composition formed from the oligomerization of at least the first silane chemical composition and a second silane chemical composition, wherein the first silane chemical composition and the second silane chemical composition are different chemical compositions.

In an embodiment 41 of the glass container 1, the glass container 1 is designed according to its embodiment 40, wherein the first silane chemical composition is an aromatic silane chemical composition.

In an embodiment 42 of the glass container 1, the glass container 1 is designed according to its embodiment 38, wherein the coupling agent comprises a silsesquioxane chemical composition comprising an aromatic moiety and an amine moiety.

In an embodiment 43 of the glass container 1, the glass container 1 is designed according to its embodiment 38, wherein the coupling agent comprises at least one of: a mixture of a first silane chemical composition and a second silane chemical composition; and a chemical composition formed from the oligomerization of at least the first silane chemical composition and the second silane chemical composition, wherein the first silane chemical composition and the second silane chemical composition are different chemical compositions.

In an embodiment 44 of the glass container 1, the glass container 1 is designed according to its embodiment 43, wherein the first silane chemical composition is an aromatic silane chemical composition.

In an embodiment 45 of the glass container 1, the glass container 1 is designed according to any of its embodiments 38 to 44, wherein the polymer chemical composition is a polyimide chemical composition.

In an embodiment 46 of the glass container 1, the glass container 1 is designed according to any of its embodiments 1 to 45, wherein the interior volume Vᵢ of the glass container comprises a pharmaceutical composition.

In an embodiment 47 of the glass container 1, the glass container 1 is designed according to any of its embodiments 1 to 46, wherein the glass container 1 comprises a closure at the top of the glass container 1, preferably a lid.

Also disclosed is an embodiment 1 of a process 1 or making an item, preferably a glass container, comprising as process steps
I) loading a glass tube having a first end and a further end into a machine, preferably a rotary machine, the glass tube having a wall thickness d_{w} and an outer diameter d_{c};
II) heating the glass tube, while rotating around its major axis, to a temperature above its glass transition temperature, preferably above its softening temperature, with a heating element, preferably with a flame;
III) pulling the heated glass tube, while rotating around its major axis, for stretching and creating a container closure;
IV) while the heated glass tube is still rotating around its major axis, shaping the container closure, preferably while still having a temperature above its glass transition temperature, preferably above its softening temperature, so as to obtain a glass bottom and a curved glass heel via which the glass bottom is connected to the glass tube, for the formation of a glass container,
wherein the curved glass heel is defined by an outer radius (rₒ), an inner radius (rᵢ) and a thickness of the glass (dₕ) in the curved glass heel and wherein shaping in process step IV) is performed to adjust rₒ and dₕ, preferably to adjust rₒ, rᵢ and dₕ, in such a way that the following condition is fulfilled: $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 0.55 mm ,$ preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 0.75 mm ,$ more preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 1.00 mm ,$ even more preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 1.50 mm$ and
most preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 2.00 mm .$

The "softening temperature" of the glass is the temperature at which the glass has a viscosity (determined according to ISO 7884-6:1987) of 10^{7.6} dPa×sec.

In an embodiment 2 of the process 1 disclosed herein, the process 1 is designed according to its embodiment 1, wherein in process step IV) adjustment of rₒ and dₕ, preferably adjustment of rₒ, rᵢ and dₕ, is accomplished by an adjustment of the rotation speed of the rotary machine, by an adjustment of the heating element, preferably by an adjustment of the shape of the flame, the position of the flame at which the glass is subjected to heat softening or a combination of these measures, by using molding tools that act on predetermined positions of the outer surface of the glass heel, preferably by using a molding roller, or by a combination of at least two of these measures.

In an embodiment 3 of the process 1 disclosed herein, the process is designed according to its embodiment 1 or 2, wherein shaping in process step IV) comprises the sub-steps of
IVa) heating the glass bottom to a temperature above its glass transition temperature, preferably above its softening temperature, wherein the peripheral zones of the glass bottom are heated to a larger extent compared to the middle section of the glass bottom, thereby also melting the wall of the glass tube in a region of the glass tube that is in contact with the curved glass heel and thereby also increasing the mass of molten glass in that region of the curved glass heel;
IVb) shaping the exterior surface of the curved glass heel, while still having a temperature above its glass transition temperature, preferably above its softening temperature, by means of a molding tool, preferably a molding roller, that contacts the exterior surface of the curved glass heel.

In an embodiment 4 of the process 1 disclosed herein, the process 1 is designed according to any of its embodiments 1 to 3, wherein shaping in process step IV) is performed in such a way that dₕ is in the range from 1.0 to 5.0 mm, preferably in the range from 1.05 to 3.0 mm, more preferably in the range from 1.15 to 2.5 mm, even more preferably in the range from 1.3 to 2.0 mm and most preferably in the range from 1.4 to 1.9 mm.

In an embodiment 5 of the process 1 disclosed herein, the process 1 is designed according to any of its embodiments 1 to 4, wherein shaping in process step IV) is performed in such a way that rₒ is in the range from 0.5 to 4.0 mm, preferably in the range from 1.1 to 3.0 mm, more preferably in the range from 1.2 to 2.5 mm, even more preferably in the range from 1.3 to 2.0 mm and most preferably in the range from 1.4 to 1.7 mm.

In an embodiment 6 of the process 1 disclosed herein, the process 1 is designed according to any of its embodiments 1 to 5, wherein shaping in process step IV) is performed in such a way that rᵢ is in the range from 0.6 to 4.0 mm, preferably in the range from 0.7 to 3.0 mm, more preferably in the range from 0.8 to 2.5 mm, even more preferably in the range from 0.85 to 2.0 mm and most preferably in the range from 0.9 to 1.6 mm.

In an embodiment 7 of the process 1 disclosed herein, the process 1 is designed according to any of its embodiments 1 to 6, wherein shaping in process step IV) is performed in such a way that the following condition is fulfilled: ${r}_{i} > 0.7 mm ,$ preferably ${r}_{i} > 0.8 mm ,$ more preferably ${r}_{i} > 0.9 mm ,$ even more preferably ${r}_{i} > 1.0 mm$ and
most preferably ${r}_{i} > 1.2 mm .$

In an embodiment 8 of the process 1 disclosed herein, the process 1 is designed according to any of its embodiments 1 to 7, wherein shaping in process step IV) is performed in such a way that the following condition is fulfilled: ${r}_{i} + {d}_{h} - {r}_{o} > 0 mm ,$ preferably ${r}_{i} + {d}_{h} - {r}_{o} > 0.1 mm ,$ more preferably ${r}_{i} + {d}_{h} - {r}_{o} > 0.25 mm ,$ even more preferably ${r}_{i} + {d}_{h} - {r}_{o} > 0.5 mm$ and
most preferably ${r}_{i} + {d}_{h} - {r}_{o} > 0.75 mm .$

In an embodiment 9 of the process 1 disclosed herein, the process 1 is designed according to any of its embodiments 1 to 8, wherein shaping in process step IV) is performed in such a way that the following condition is fulfilled: ${r}_{o} < 3.0 \times {d}_{w} ,$ preferably ${r}_{o} < 2.0 \times {d}_{w} ,$ more preferably ${r}_{o} < 1.5 \times {d}_{w} ,$ even more preferably ${r}_{o} < 1.25 \times {d}_{w}$ and
most preferably ${r}_{o} < 1.0 \times {d}_{w} .$

In an embodiment 10 of the process 1 disclosed herein, the process 1 is designed according to any of its embodiments 1 to 9, wherein shaping in process step IV) is performed in such a way that the following condition is fulfilled: ${d}_{h} > 1.05 \times {d}_{w} ,$ preferably ${d}_{h} > 1.15 \times {d}_{w} ,$ more preferably ${d}_{h} > 1.25 \times {d}_{w} ,$ even more preferably ${d}_{h} > 1.4 \times {d}_{w}$ and
most preferably ${d}_{h} > 1.6 \times {d}_{w} .$

In an embodiment 11 of the process 1 disclosed herein, the process 1 is designed according to any of its embodiments 1 to 10, wherein shaping in process step IV) is performed in such a way that the following condition is fulfilled: ${d}_{h} - {d}_{cgb} > 0.5 mm ,$ preferably ${d}_{h} - {d}_{cgb} > 1.0 mm ,$ more preferably ${d}_{h} - {d}_{cgb} > 1.5 mm ,$ even more preferably ${d}_{h} - {d}_{cgb} > 2.0 mm$ and
most preferably ${d}_{h} - {d}_{cgb} > 3.0 mm$

In an embodiment 12 of the process 1 disclosed herein, the process 1 is designed according to its embodiment 11, wherein shaping in process step IV) is performed in such a way that d_{cgb} is in the range from 0.6 to 2.5 mm, preferably in the range from 1.0 to 2.0 mm, more preferably in the range from 1.05 to 1.7 mm, even more preferably in the range from 1.1 to 1.6 mm and most preferably in the range from 1.2 to 1.5 mm.

In an embodiment 13 of the process 1 disclosed herein, the process 1 is designed according to any of its embodiments 1 to 12, wherein the glass tube used in process step I) is a cylindrical glass tube and wherein the glass bottom shaped in process step IV) is a circular glass bottom.

In an embodiment 14 of the process 1 disclosed herein, the process 1 is designed according to any of its embodiment 13, wherein shaping in process step IV) is performed in such a way that the circular glass bottom has a thickness that varies within the area from the centre of the circular glass bottom to the outer area of the circular glass bottom, wherein the minimum glass thickness of the circular glass bottom is d_{b,min} and wherein the following condition is fulfilled: ${d}_{h} / {d}_{b , min} < 3.0 ,$ preferably ${d}_{h} / {d}_{b . min} < 2.5 ,$ more preferably ${d}_{h} / {d}_{b , min} < 2.0 ,$ even more preferably ${d}_{h} / {d}_{b , min} < 1.6$ and
most preferably ${d}_{h} / {d}_{b . min} < 1.2 .$

In an embodiment 15 of the process 1 disclosed herein, the process 1 is designed according to its embodiment 13 or 14, wherein shaping in process step IV) is performed in such a way that d_{b,min} is in the range from 0.6 to 3.0 mm, preferably in the range from 0.8 to 2.5 mm, more preferably in the range from 1.0 to 2.0 mm, even more preferably in the range from 1.2 to 1.8 mm and most preferably in the range from 1.4 to 1.7 mm.

In an embodiment 16 of the process 1 disclosed herein, the process 1 is designed according to any of its embodiments 13 to 15, wherein shaping in process step IV) is performed in such a way that a contour of the cross section of the circular glass bottom on the side directed to the interior side of the glass container over whole diameter of the circular glass bottom is characterized by not more than two inflection points.

In an embodiment 17 of the process 1 disclosed herein, the process 1 is designed according to any of its embodiments 13 to 16, wherein shaping in process step IV) is performed in such a way that the circular bottom is characterized by a bottom diameter d_{bot-tom}, wherein ${d}_{bottom} = {d}_{outer} - 2 \times {r}_{o} ,$ wherein dₒᵤₜₑᵣ corresponds to the outer diameter of the glass tube measured at the first end of the glass tube and wherein d_{bottom} is in the range from 10 to 50 mm, preferable in the range from 12 to 30 mm and more preferably in the range from 13 to 25 mm.

In an embodiment 18 of the process 1 disclosed herein, the process 1 is designed according to any of its embodiments 13 to 17, wherein shaping in process step IV) is performed in such a way that the outer surface of the curved glass heel has the form of a circular arc Iₒ and wherein Iₒ has a length of 2×π×rₒ/4.

In an embodiment 19 of the process 1 disclosed herein, the process 1 is designed according to any of its embodiments 13 to 17, wherein shaping in process step IV) is performed in such a way that the outer surface of the curved glass heel has the form of a circular arc Iₒ and wherein Iₒ has a length in the range from (50°/360°)×2π×rₒ to (80°/360°)×2π×rₒ, more preferably in the range from (60°/360°)×2π×rₒ to (80°/360°)×2π×rₒ.

In an embodiment 20 of the process 1 disclosed herein, the process 1 is designed according to any of its embodiments 1 to 19, wherein shaping in process step IV) is performed in such a way that the following condition is fulfilled: $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) < 20 mm ,$ preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) < 10 mm ,$ and
more preferably $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) < 5 mm .$

In an embodiment 21 of the process 1 disclosed herein, the process 1 is designed according to any of its embodiments 1 to 20, wherein the glass container that is formed in process step IV) is a packaging container for a medical or a pharmaceutical packaging good or both.

In an embodiment 22 of the process 1 disclosed herein, the process 1 is designed according to any of its embodiments 1 to 21, wherein the glass container that is formed in process step IV) is a vial.

In an embodiment 23 of the process 1 disclosed herein, the process 1 is designed according to any of its embodiments 1 to 22, wherein the glass of the glass tube provided in process step I) is of a type selected from the group consisting of a borosilicate glass, an aluminosilicate glass, soda lime glass and fused silica.

In an embodiment 24 of the process 1 disclosed herein, the process 1 is designed according to any of its embodiments 1 to 23, wherein the glass container obtained in process step IV) is thermally tempered, chemically tempered or both. Methods for thermally and chemically tempering glass are, for example, disclosed in EP 1 593 658 A1.

Also disclosed herein is an embodiment 1 of a glass container 2 obtainable by the process 1 according to any of its embodiments 1 to 24. In a preferred embodiment of the glass container 2, this glass container 2 shows the technical features of the glass container 1 of the invention according to any of its embodiments, respectively.

A contribution to solving at least one of the objects according to the invention is made by an embodiment 1 of a process 2 comprising as process steps
a) providing a glass container 1 according to any of its embodiments 1 to 45;
b) inserting a pharmaceutical composition into the interior volume Vᵢ of the glass container; and
c) closing the glass container.

The closing in the process step c) preferably comprises contacting the glass container with a closure, preferably a lid, preferably covering an opening of the glass container with the closure, and joining the closure to the hollow body. The joining preferably comprises creating a form-fit of the glass container, preferably the flange of the glass container, with the closure. The form-fit is preferably created via a crimping step. The process is preferably a process for packaging the pharmaceutical composition.

Also disclosed herein is an embodiment 1 of a process 3 comprising as process steps
A) providing the glass container 1 according to its embodiment 46 or the closed glass container obtainable by process 2 according to the invention; and
B) administering the pharmaceutical composition to a patient.

A contribution to solving at least one of the objects according to the invention is made by an embodiment 1 of a use 1 of the glass container 1 according to the invention for packaging a pharmaceutical composition. The packaging preferably comprises inserting the pharmaceutical composition into the interior volume and closing the glass container.

### Glass container

The glass container according to the invention may have any size or shape which the skilled person deems appropriate in the context of the invention. Preferably, the head region of the glass container comprises an opening, which allows for inserting a pharmaceutical composition into the interior volume of the glass container. The glass container comprises as container parts a glass tube with a first end and a further end, a glass bottom that closes the glass tube at the first end and a curved glass heel extending from an outer area of the glass bottom to the first end of the glass tube. Preferably, the glass container is of a one-piece design that is prepared by providing a glass tube, preferably in form of a hollow cylinder, forming the glass bottom of the glass container and a curved glass heel via which the glass bottom is connected to the glass tube, thereby closing the glass tube at this end. A preferred glass container is a pharmaceutical glass container, more preferably one selected from the group consisting of a vial, an ampoule or a combination thereof, wherein a vial is particularly preferred.

For the use in this document, the interior volume Vᵢ represents the full volume of the interior of the glass container. This volume may be determined by filling the interior of the glass container with water up to the brim and measuring the volume of the amount of water which the interior can take up to the brim. Hence, the interior volume as used herein is not a nominal volume as it is often referred to in the technical field of pharmacy. This nominal volume may for example be less than the interior volume by a factor of about 0.5.

### Glass

The glass of the container may be any type of glass and may consist of any material or combination of materials which the skilled person deems suitable in the context of the invention. Preferably, the glass is suitable for pharmaceutical packaging. Particularly preferable, the glass is of type I, more preferably type I b, in accordance with the definitions of glass types in section 3.2.1 of the European Pharmacopoeia, 7th edition from 2011. Additionally or alternatively preferable to the preceding, the glass is selected from the group consisting of a borosilicate glass, an aluminosilicate glass, soda lime glass and fused silica; or a combination of at least two thereof. For the use in this document, an aluminosilicate glass is a glass which has a content of Al₂O₃ of more than 8 wt.-%, preferably more than 9 wt.-%, particularly preferable in a range from 9 to 20 wt.-%, in each case based on the total weight of the glass. A preferred aluminosilicate glass has a content of B₂O₃ of less than 8 wt.-%, preferably at maximum 7 wt.-%, particularly preferably in a range from 0 to 7 wt.-%, in each case based on the total weight of the glass. For the use in this document, a borosilicate glass is a glass which has a content of B₂O₃ of at least 1 wt.-%, preferably at least 2 wt.-%, more preferably at least 3 wt.-%, more preferably at least 4 wt.-%, even more preferably at least 5 wt.-%, particularly preferable in a range from 5 to 15 wt.-%, in each case based on the total weight of the glass. A preferred borosilicate glass has a content of Al₂O₃ of less than 7.5 wt.-%, preferably less than 6.5 wt.-%, particularly preferably in a range from 0 to 5.5 wt.-%, in each case based on the total weight of the glass. In a further aspect, the borosilicate glass has a content of Al₂O₃ in a range from 3 to 7.5 wt.-%, preferably in a range from 4 to 6 wt.-%, in each case based on the total weight of the glass.

A glass which is further preferred is essentially free from B Therein, the wording "essentially free from B" refers to glasses which are free from B which has been added to the glass composition by purpose. This means that B may still be present as an impurity, but preferably at a proportion of not more than 0.1 wt.-%, more preferably not more than 0.05 wt.-%, in each case based on the weight of the glass.

### Curved glass heel

An essential element of the glass container 1 or 2 according to the present invention is the curved glass heel iii) that connects the outer area of the glass bottom ii) with the first end of the glass tube i) and that is formed in process step IV) of the process 1 according to the present invention when shaping the container closure. The curved glass heel at the exterior side of the glass container and at the interior side of the glass container preferably follows the form of a circular arc and is characterized by an inner radius rᵢ and an outer radius rₒ. The thickness of the glass in the curved glass heel is dₕ.

### Pharmaceutical composition

In the context of the invention, every pharmaceutical composition which the skilled person deems suitable comes into consideration. A pharmaceutical composition is a composition comprising at least one active ingredient. A preferred active ingredient is a vaccine. The pharmaceutical composition may be fluid or solid or both, wherein a fluid composition is particularly preferred herein. A preferred solid composition is granular such as a powder, a multitude of tablets or a multitude of capsules. A further preferred pharmaceutical composition is a parenterialium, i.e. a composition which is intended to be administered via the parenteral route, which may be any route which is not enteral. Parenteral administration can be performed by injection, e.g. using a needle (usually a hypodermic needle) and a syringe, or by the insertion of an indwelling catheter.

According to a first preferred embodiment of the glass container the glass container is a vial with an overflow capacity equal to or larger than 1 ml up to maximal 5 ml, preferably a vial with a size designation "2R" according to DIN EN ISO 8362-1:2016-06, wherein it is furthermore preferred that at least one, preferably all of the following conditions i) to vi) is/are fulfilled:
i) dₕ is in the range from 1.3 to 1.8 mm;
ii) rᵢ is in the range from 0.7 to 1.3 mm;
iii) d_{w} is in the range from 0.9 to 1.15 mm;
iv) d_{c} is in the range from 15.85 to 16.15 mm;
v) d_{bottom} is in the range from 10 to 15.8 mm, preferably in the range from 13.7 to 15 mm and even more preferably in the range from 13.9 to 14.5 mm.

According to a second preferred embodiment of the glass container the glass container is a vial with an overflow capacity of larger than 4 ml up to maximal 8 ml, preferably a vial with a size designation "4R" according to DIN EN ISO 8362-1:2016-06, wherein it is furthermore preferred that at least one, preferably all of the following conditions i) to v) is/are fulfilled:
i) dₕ is in the range from 1.3 to 1.8 mm;
ii) rᵢ is in the range from 0.7 to 1.3 mm;
iii) d_{w} is in the range from 0.9 to 1.15 mm;
iv) d_{c} is in the range from 15.85 to 16.15 mm;
v) d_{bottom} is in the range from 10 to 15.8 mm, preferably in the range from 13.7 to 15 mm and even more preferably in the range from 13.9 to 14.5 mm.

According to a third preferred embodiment of the glass container the glass container is a vial with an overflow capacity of larger than 8 ml up to maximal 10.75 ml, preferably a vial with a size designation "6R" according to DIN EN ISO 8362-1:2016-06, wherein it is furthermore preferred that at least one, preferably all of the following conditions i) to vi) is/are fulfilled:
i) dₕ is in the range from 1.3 to 1.8 mm;
ii) rᵢ is in the range from 1.4 to 2.6 mm;
iii) d_{w} is preferably in the range from 0.9 to 1.15 mm;
iv) d_{c} is in the range from 21.8 to 22.2 mm;
v) d_{bottom} is in the range from 13.85 to 23.8 mm, preferably in the range from 21 to 23 mm and even more preferably in the range from 21.5 to 22.5 mm.

According to a fourth preferred embodiment of the glass container the glass container is a vial with an overflow capacity of larger than 10.75 ml up to maximal 12.5 ml, preferably a vial with a size designation "8R" according to DIN EN ISO 8362-1:2016-06, wherein it is furthermore preferred that at least one, preferably all of the following conditions i) to v) is/are fulfilled:
i) dₕ is in the range from 1.3 to 1.8 mm;
ii) rᵢ is in the range from 1.4 to 2.6 mm;
iii) d_{w} is preferably in the range from 0.9 to 1.15 mm;
iv) d_{c} is in the range from 21.8 to 22.2 mm;
v) d_{bottom} is in the range from 13.85 to 23.8 mm, preferably in the range from 21 to 23 mm and even more preferably in the range from 21.5 to 22.5 mm.

According to a fifth preferred embodiment of the glass container the glass container is a vial with an overflow capacity of larger than 12.5 ml up to maximal 16.25ml, preferably a vial with a size designation "10R" according to DIN EN ISO 8362-1:2016-06, wherein it is furthermore preferred that at least one, preferably all of the following conditions i) to v) is/are fulfilled:
i) dₕ is in the range from 1.3 to 1.8 mm;
ii) rᵢ is in the range from 1.4 to 2.6 mm;
iii) d_{w} is preferably in the range from 0.9 to 1.15 mm;
iv) d_{c} is in the range from 23.8 to 24.2 mm;
v) d_{bottom} is in the range from 15.38 to 23.8 mm, preferably in the range from 21 to 23 mm and even more preferably in the range from 21.5 to 22.5 mm.

According to a sixth preferred embodiment of the glass container the glass container is a vial with an overflow capacity of larger than 16.25 ml up to maximal 22.5ml, preferably a vial with a size designation "15R" according to DIN EN ISO 8362-1:2016-06, wherein it is furthermore preferred that at least one, preferably all of the following conditions i) to v) is/are fulfilled:
i) dₕ is in the range from 1.3 to 1.8 mm;
ii) rᵢ is in the range from 1.4 to 2.6 mm;
iii) d_{w} is in the range from 0.9 to 1.15 mm;
iv) d_{c} is in the range from 23.8 to 24.2 mm;
v) d_{bottom} is in the range from 15.38 to 23.8 mm, preferably in the range from 21 to 23 mm and even more preferably in the range from 21.5 to 22.5 mm.

According to a seventh preferred embodiment of the glass container the glass container is a vial with an overflow capacity of larger than 22.5 ml up to maximal 29.25ml, preferably a vial with a size designation "20R" according to DIN EN ISO 8362-1:2016-06, wherein it is furthermore preferred that at least one, preferably all of the following conditions i) to iv) is/are fulfilled:
i) dₕ is in the range from 1.56 to 2.16 mm;
ii) d_{w} is in the range from 1.15 to 1.25 mm;
iii) d_{c} is in the range from 29.75 to 30.25 mm;
iv) d_{bottom} is in the range from 19.23 to 29.8 mm, preferably in the range from 25 to 29 mm and even more preferably in the range from 27.5 to 28.4 mm.

According to an eighth preferred embodiment of the glass container the glass container is a vial with an overflow capacity of larger than 29.25 ml up to maximal 35 ml, preferably a vial with a size designation "25R" according to DIN EN ISO 8362-1:2016-06, wherein it is furthermore preferred that at least one, preferably all of the following conditions i) to iv) is/are fulfilled:
i) dₕ is in the range from 1.56 to 2.16 mm;
ii) d_{w} is in the range from 1.15 to 1.25 mm;
iii) d_{c} is in the range from 29.75 to 30.25 mm;
iv) d_{bottom} is in the range from 19.23 to 29.8 mm, preferably in the range from 25 to 29 mm and even more preferably in the range from 27.5 to 28.4 mm.

According to a ninth preferred embodiment of the glass container the glass container is a vial with an overflow capacity of larger than 35 ml up to maximal 49.75ml, preferably a vial with a size designation "30R" according to DIN EN ISO 8362-1:2016-06, wherein it is furthermore preferred that at least one, preferably all of the following conditions i) to iv) is/are fulfilled:
i) dₕ is in the range from 1.56 to 2.16 mm;
ii) d_{w} is in the range from 1.15 to 1.25 mm;
iii) d_{c} is in the range from 29.75 to 30.25 mm;
iv) d_{bottom} is in the range from 19.23 to 29.8 mm, preferably in the range from 25 to 29 mm and even more preferably in the range from 27.5 to 28.4 mm.

According to a tenth preferred embodiment of the glass container the glass container is a vial with an overflow capacity of larger than 49.75 ml up to maximal 92.5ml, preferably a vial with a size designation "50R" according to DIN EN ISO 8362-1:2016-06, wherein it is furthermore preferred that at least one, preferably all of the following conditions i) to iv) is/are fulfilled:
i) dₕ is in the range from 1.95 to 2.7 mm;
ii) d_{w} is in the range from 1.45 to 1.55 mm;
iii) d_{c} is in the range from 39.6 to 40.4 mm;
iv) d_{bottom} is in the range from 24.62 to 39.8 mm, preferably in the range from 35 to 38 mm and even more preferably in the range from 36.8 to 37.6 mm.

According to an eleventh preferred embodiment of the glass the glass container is a vial with an overflow capacity of larger than 92.5 ml up to maximal 150 ml, preferably a vial with a size designation "100R" according to DIN EN ISO 8362-1:2016-06, wherein it is furthermore preferred that at least one, preferably all of the following conditions i) to iii) is/are fulfilled:
i) d_{w} is in the range from 1.65 to 1.75 mm;
ii) d_{c} is in the range from 46.4 to 47.6 mm;
iii) d_{bottom} is in the range from 30 to 46.8 mm, preferably in the range from 42 to 45 mm and even more preferably in the range from 43.6 to 44.4 mm.

### MEASUREMENT METHODS

The following measurement methods are to be used in the context of the invention. Unless otherwise specified, the measurements have to be carried out at an ambient temperature of 23°C, an ambient air pressure of 100 kPa (0.986 atm) and a relative atmospheric humidity of 50%.

### Determination of rᵢ, rₒ and dₕ

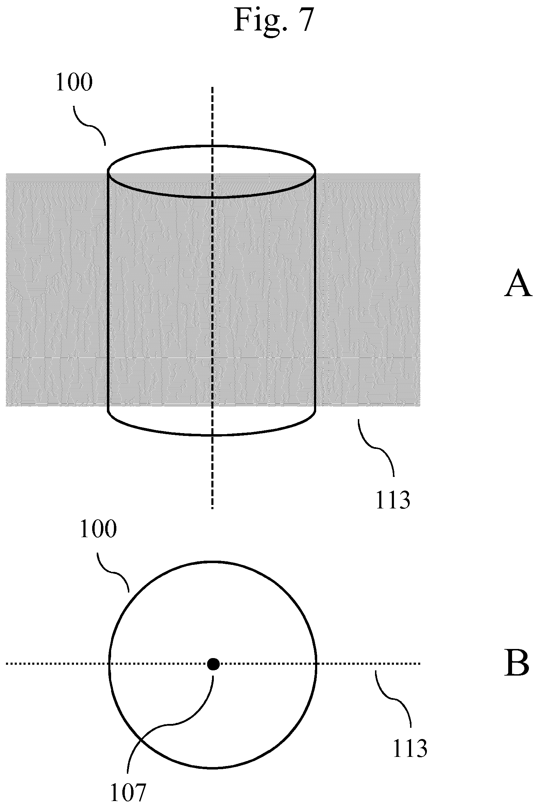

- The inner diameter rᵢ, the outer diameter rₒ and the thickness of the glass of the curved glass heel dₕ can be determined in an non-destructive manner using a profile projector. This approach is particularly suitable for glass containers that have been chemically and/or thermally tempered and that therefore cannot be easily sliced in half without the glass cracking or bursting. For determining rᵢ, rₒ and dₕ in a non-destructive manner radius templates are used that are commercially available, for example, from Mitutoyo Deutschland GmbH, Neuss, Germany. These templates are printed on a transparent foil which, after applying a line that indicates the ground-level bearing surface and a tangent that confines an angle of 45° with the ground-level bearing surface, is glued to the ground glass of a Mitutoyo PJ-3000 profile projector. The profile projector has a 10X magnification and is operated with transmitted light illumination. The vials are placed in Hallbrite^{®} BHB (a butyloctyl salicylate obtainable from the Hallstar Company, Chicago, USA), which is filled into a glass bowl. Hallbrite^{®} BHB is used to visualize the inner contour of the vial. It is ensured that the cross-section of the glass container that is inspected in the profile projector corresponds to the plane that is centrically located in the glass container and that comprises the longitudinal axis of the glass container, i. e. the axis that goes perpendicular through the centre of the bottom (see figures 7A and 7B).
- To improve the measuring accuracy, rᵢ, rₒ and dₕ can also be determined from a physical cross-sectional cut parallel along to the longitudinal axis of the container (it is again ensured that the cross-section of the glass container corresponds to the plane that is centrically located in the glass container and that comprises the longitudinal axis as shown in figures 7A and 7B). For preparation without breakage, the container may be embedded into transparent 2-component epoxy resin, for example STRUERS GmbH, EpoFix Resin, or other suitable materials. After curing of the epoxy resin, a cross-sectional cut parallel along to the container axis can be achieved by machine-supported sawing, grinding and polishing. Geometrical features of the container can then be determined (measured) by means of non-distorting image capturing and geometrical analysis software tools.

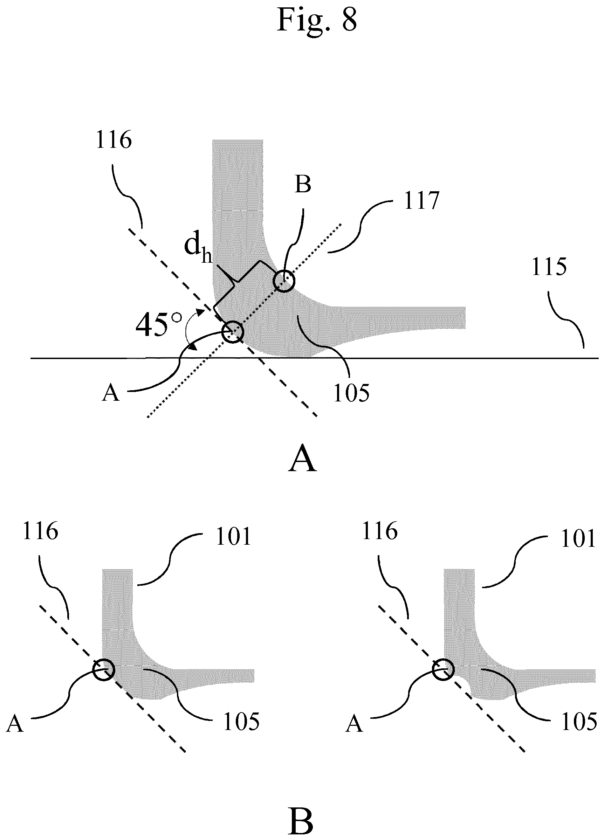

In the cross-sectional plane of the glass container that is evaluated by means of the two approaches described above rᵢ, rₒ and dₕ can be determined as follows, preferably is determined as follows:
- For the determination of dₕ a tangent that confines an angle of 45° with the ground-level bearing surface (i. e. the surface that comes into contact with the exterior side of the container bottom if the container is placed upright) is placed at the exterior surface of the curved glass heel as shown in figure 8A (the dashed line indicates the 45°-tangent). The point of the exterior surface of the curved glass heel that comes into contact with the 45-tangent is designated as "A" (see figure 8A). Next, a straight line orthogonal to 45°-tangent is guided through point "A" (the dotted line in figure 8A indicates the orthogonal line). The position at which this straight orthogonal line breaks through the interior side of the curved glass heel is designated as "B" (see figure 8A). dₕ corresponds to the distance between points "A" and "B".

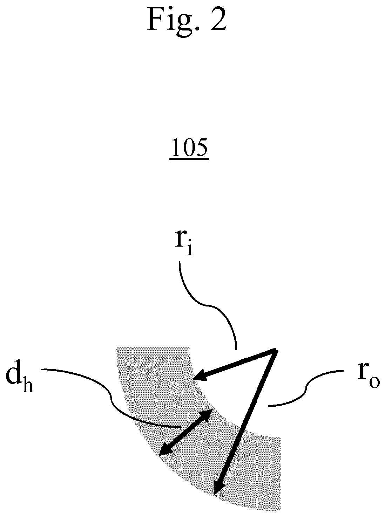

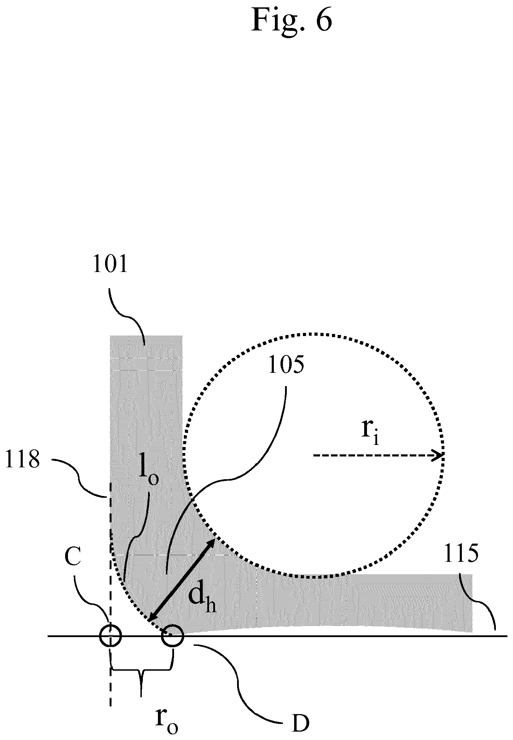

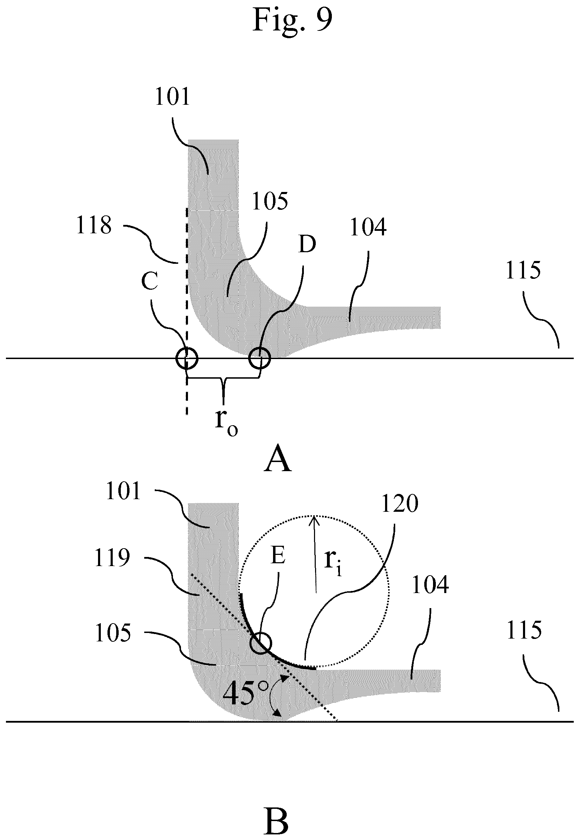

If there are more than only one point of exterior surface of the curved glass heel that comes into contact with the 45-tangent (as shown, for example, in figure 8B), point "A" corresponds to the point that is nearest to the outer surface of the glass tube. However, according to a particular embodiment of the glass container according to the invention the curved glass heel has a shape such that, when placing the 45°-tangent to the exterior surface of the curved glass heel, there is only one point of exterior surface of the curved glass heel that comes into contact with the 45-tangent.
- For the determination of rₒ the intersection point of a first straight line that forms an elongation of the exterior side of the glass tube and the ground-level bearing surface is determined (see the vertical dashed line in figure 9A). If the curved glass heel laterally extends over the first straight line that forms an elongation of the exterior side, the first line goes through the curved glass heel until it reaches the ground-level bearing surface. The intersection point is designated as "C". Next, the point of the exterior surface of the glass container that contacts the ground-level bearing surface and that is closest to point "C" is determined. This intersection point is designated as "D" (see figure 9A). rₒ corresponds to the distance between points "C" and "D". In case of a curved glass heel having a circular arc lₒ at the outer surface of the curved glass heel with a length of 2×π×rₒ/4 (see, for example, the shape of the curved glass heel in fig. 2), the distance between points "C" and "D" corresponds to the radius rₒ of the circle that is defined by the shape of the outer surface of the curved glass heel. However, the glass container according to the present invention is not limited to glass containers in which the circular arc lₒ at the outer surface of the curved glass heel has a length of (90°/360°)×2π×rₒ, but also comprises glass containers in which this circular arc lₒ is smaller (see, for example, the shape of the curved glass heel in fig. 6 in which the outer area of the glass bottom somehow "extends" into the area of the curved glass heel) or glass containers in which the outer surface of the curved glass heel is not shaped in the form of a circular arc at all. In these cases rₒ actually does not correspond to the outer radius of the curved glass heel, but to width of the glass overhang in the area of the curved glass heel that is defined by the distance between points "C" and "D".
- For the determination of rᵢ a tangent that confines an angle of 45° with the ground-level bearing surface is placed at the interior surface of the curved glass heel as shown in figure 9B (the dashed line indicates the 45°-tangent). The point of the interior surface of the curved glass heel that comes into contact with the 45-tangent is designated as "E" (see fig. 9B). Next, the largest quarter circle is determined that can be properly positioned on the inner contour of the curved glass heel, that comprises point "E" in the middle of the quarter circle and the ends of which do not extending into the mass of glass. rᵢ corresponds to the radius of the largest quarter circles.

If there are more than only one point of interior surface of the curved glass heel that comes into contact with the 45°-tangent, point "E" corresponds to the geometric centre between points "P1" and "P2", wherein point "P1" is the point on the 45°-tangent that comes into contact with the interior surface of the curved glass heel and that is located nearest to the glass tube and point "P2" is the point on the 45°-tangent that comes into contact with the interior surface of the curved glass heel and that is located nearest to the glass bottom. However, according to a particular embodiment of the glass container according to the invention the curved glass heel has a shape such that, when placing the 45°-tangent to the interior surface of the curved glass heel, there is only one point of interior surface of the curved glass heel that comes into contact with the 45-tangent.

### Wall thickness d_{w} and tolerance of wall thickness

The wall thickness and deviations from the mean value of the wall thickness (tolerance) are determined in accordance with the following standards for the respective type of hollow body:
DIN ISO 8362-1 for vials,
DIN ISO 9187-1 for ampoules.

### Axial load and burst pressure

The mechanical resistance against axial compression of the vial is determined by means of vertical load strength testing in accordance to DIN EN ISO 8113 ("Glass containers - Resistance to vertical load - Test methods"), where a compressive force is applied in axial direction and is increased with a constant load rate of 500 N/min until breakage of the container.

The mechanical resistance against internal pressure of the vial is determined by means of burst strength testing in accordance to DIN EN ISO 7458 ("Glass containers - Internal pressure resistance - Test methods"), where a hydraulic pressure is applied from inside of the vial and is increased with a constant load rate of 5.8 bar/s until breakage of the container.

### Examples 1 and 2

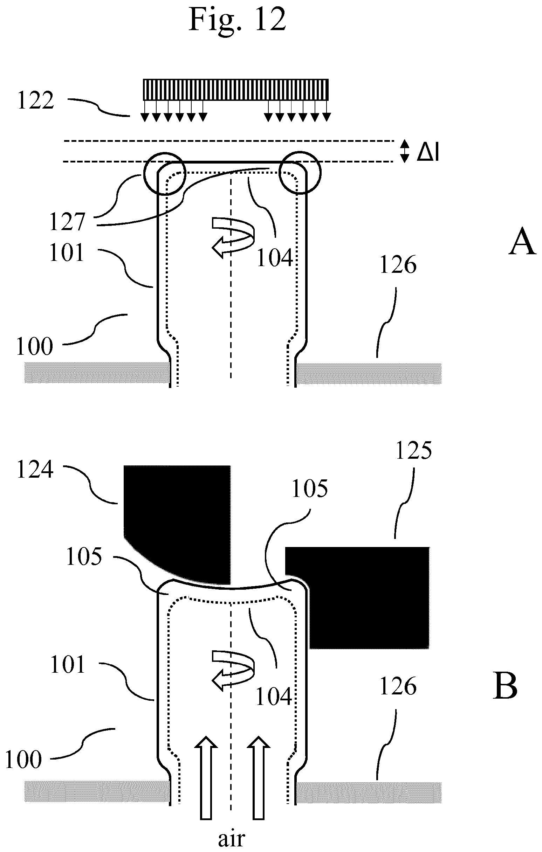

A glass tube having an outer diameter of 16 mm and a wall thickness d_{w} of 1 mm made of borosilicate glass is loaded into the head of a rotary machine. While rotating around its major axis the glass tube is heated to its softening point with flames and the heated glass is pulled along its major axis for stretching and creating a container closure. The container closure is shaped to form a glass bottom and a curved glass heel via which the glass bottom is connected to the glass tube. For the formation of the desired shape of the curved glass heel in the rotary machine the glass container is brought in an upward position with the glass bottom showing to the top as indicated in figures 12A and 12B. In a first step, the glass bottom is heated with a burner in which the peripheral zones are heated to a larger extend compared to the middle section so that the area in the peripheral zone of the glass bottom (i. e. in an area that comprises the curved glass heel and the part of the glass tube that is in contact with the curved glass heel) are particularly heated. As a result, a melting of the glass bottom even into the wall of the hitherto cylindrical glass tube occurs so that the glass contracts slightly under the surface tension and the bottom slightly sinks (see Δl in figure 12A). This leads to an increased accumulation of glass in the peripheral zone of the floor (see the circles in figure 12A) compared to a prior art process in which the surface of the glass floor is heated evenly. The additional mass of glass in the peripheral zone of the glass bottom thus basically arises from the hitherto cylindrical wall of the glass tube which is adjacent to the glass heel.

In a second step the glass bottom is concavely pushed inward by a die, while at the same time an air flow from below pushes the bottom against the die so that it does not sink under gravity. A support roller is provided at the same time which predetermines the outer shape of the heel and which prevents the glass mass accumulated in the peripheral zone from escaping to the outside. Simultaneously, the air flow and the die cause the bottom and the peripheral zone to cool down quickly until these areas are no longer shapeable.

By means of the above described process and by varying the shape of the support roller and the area of the glass bottom that is particularly heated, four glass containers which differ with respect to the shape of the curved glass heel have been prepared. In the production process it is ensured that essentially no damages of the glass surface occur (which also includes the avoidance of any glass-glass contacts between two vials) as otherwise the advantageous effects, i. e. high absolute strength levels, by improving the shape of the curved glass heel might be at least partially eliminated. However, the relative strength improvements described herein will also be observed when using glass with defects as long as equal defect levels are compared.

For each heel shape at least 50 glass containers have been prepared in the rotary machine. The shape of one of the curved glass heels corresponds to the shape of the heel in glass containers known in the prior art that are characterized by a basically concentric arrangement of the inner and the outer contour of the curved glass heel as shown in figure 2 (Comparative Example).

**Table 1**

| Glass container | dₕ [mm] | rᵢ [mm] | d_{c} [mm] | d_{w} [mm] | [100 × (dₕ³ × rᵢ) / (d_{w} × d_{c}²)] + (4.4 mm² / d_{c})[mm] |
|---|---|---|---|---|---|
| Comparative Example | 1.00 | 0.57 | 16 | 1.00 | 0.50 |
| Example 1 | 1.55 | 1.70 | 16 | 1.00 | 2.75 |
| Example 2 | 1.65 | 0.90 | 16 | 1.00 | 1.85 |
| Example 3 | 1.55 | 1.05 | 16 | 1.00 | 1.80 |

### Evaluation

From the above described glass containers the resistance to withstand axial loads and the burst pressure performance have been determined. For each heel shape at least 50 vials have been tested. The pressures that have been determined correspond to the pressures at which 10 % of the vials burst. The results are shown in table 2, wherein the corresponding pressure values are standardised to the values that have been determined for the reference vial of the Comparative Example.

**Table 2**

| Glass container | resistance to axial load [%] | burst pressure performance [%] |
|---|---|---|
| Comparative Example | 100 | 100 |
| Example 1 | 133 | 178 |
| Example 2 | 316 | 141 |
| Example 3 | 146 | 139 |

As can be seen from the results shown in table 2, by adjusting the shape of the curved glass heel to ensure that [100 × (dₕ³ × rᵢ) / (d_{w} × d_{c}²)] + (4.4 mm² / d_{c}) reaches a value above 0.55 mm the burst pressure performance and, at the same time, the resistance to axial loads can be significantly increased.

Unless otherwise specified in the description or the particular figure:
- Figure 1: shows a cross-sectional view of a glass container according to the invention, wherein for the purpose of an improved illustration the parts of the glass container (i. e. glass tube 101, glass bottom 104 and curved glass heel 105) have been separated from each other;
- Figure 2: shows a cross-sectional view of the curved glass heel 105 of a prior art glass container;
- Figure 3A: shows a schematic depiction of the glass bottom 104;
- Figure 3B: shows a top view of the glass bottom 104;
- Figure 3C: shows a cross-sectional view of the glass bottom 104;
- Figure 4: shows a cross-sectional view of a further glass container 100 according to the invention;
- Figure 5: shows an enlarged cross-sectional view of the curved glass heel 105 in the glass container 100 according to the invention;
- Figure 6: shows an enlarged cross-sectional view of a further embodiment of the curved glass heel 105 in the glass container 100 according to the invention;
- Figure 7A: shows in a side view the localization of plane 113 that is used to determine rₒ, rᵢ and dₕ by means of the approaches that are shown in figures 8A, 8B, 9A and 9B;
- Figure 7B: shows in a top view the localization of plane 113 that is used to determine rₒ, rᵢ and dₕ by means of the approaches that are shown in figures 8A, 8B, 9A and 9B;
- Figure 8A: illustrates the determination of dₕ in a curved glass heel 105;
- Figure 8B: shows different shapes of the exterior surface of a curved glass heel 105;
- Figure 9A: illustrates the determination of rₒ in a curved glass heel 105;
- Figure 9B: illustrates the determination of rᵢ in a curved glass heel 105;
- Figure 10: shows a closed glass container 121 according to the invention;
- Figure 11A: illustrates steps I), II) and III) of process 1 according to the invention for the preparation of a glass container;
- Figure 11B: illustrates step IV) of process 1 according to the invention for the preparation of a glass container;
- Figure 12A: illustrates a sub-step in the formation of the shape of the curved glass heel according to the present invention;
- Figure 12B: illustrates a further sub-step in the formation of the shape of the curved glass heel according to the present invention;
- Figure 13: shows a flow chart of process 2 according to the invention for packaging a pharmaceutical composition.

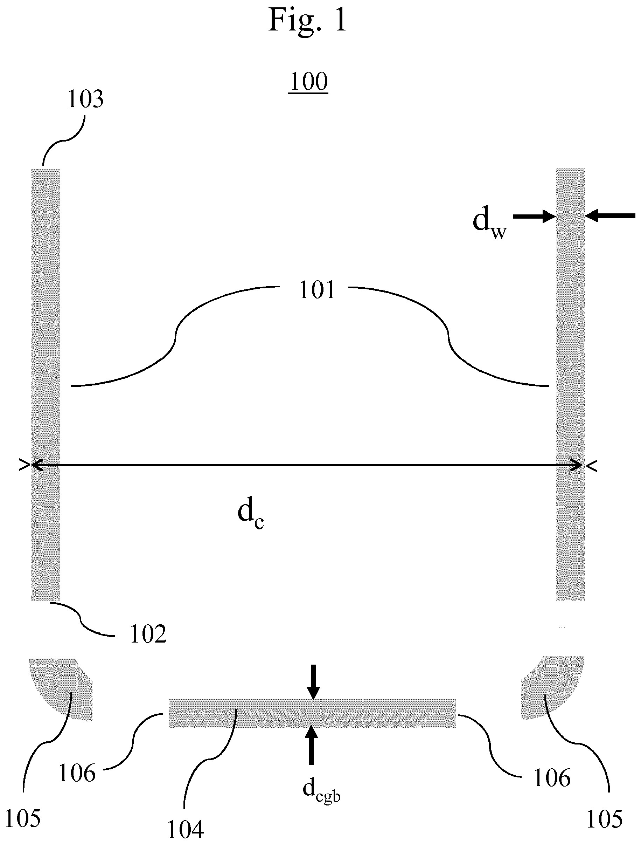

Figure 1 shows a cross-sectional view of a glass container 100 according to the invention. For the purpose of an improved illustration the individual parts of the glass container (i. e. glass tube 101, glass bottom 104 and curved glass heel 105) have been separated from each other. However, as the glass container 100 according to the invention is preferably obtained by a process in which a mother tube (which forms glass tube 101), while rotating around its major axis, is heated to its softening point with flames, in which the heated glass is pulled along its major axis for stretching and creating a container closure and in which the container closure has been shaped to form a glass bottom 104 and a curved glass heel 105, these parts are integrally connected in the glass container 100 according to the present invention. As shown in figure 1, the glass tube 101 is characterized by a first end 102 and a further end 103. The glass bottom 104 comprises an outer region 106 that in the glass container 100 is connected to the curved glass heel 105. The glass bottom 104 is characterized by a thickness in the centre d_{cgb}, whereas the glass tube 101 is characterized by a wall thickness d_{w}. The outer diameter of glass tube 101 is de.

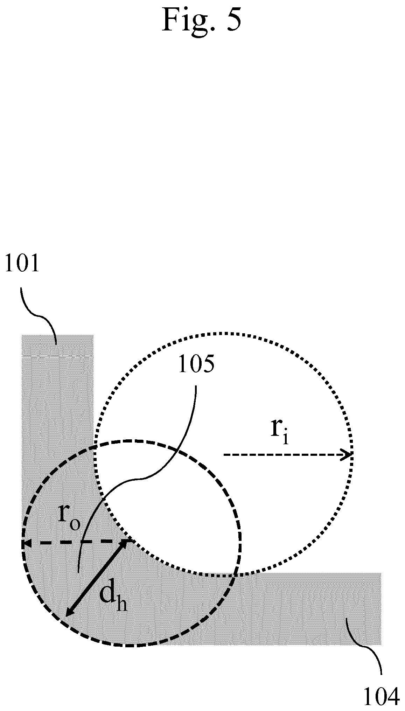

Figure 2 shows a cross-sectional view of a curved glass heel 105 and illustrates the characterization of such a curved heel 105 by means of the inner radius rᵢ, the outer radius rₒ and the thickness of the glass dₕ in the curved glass heel 105. In an ordinary glass container of the prior art as shown in figure 2, in which the glass bottom 104 has been prepared by simply bending over the heat softened areas of a mother tube by means of a process as described above and in which no particular measures have been taken to somehow shape the form the curved glass heel 105, the circle defined by inner radius rᵢ and the circle defined by outer radius rₒ are located concentric to one another as shown in figure 2. Under these circumstances, condition r₀ = rᵢ + dₕ is fulfilled. However, according to the present invention the resistance of a glass container 100 towards axial loads can be improved if a curved glass heel 105 is formed that deviates from the structure as shown in figure 2 (see, for example, the structure of the curved glass heel 105 in figure 5).

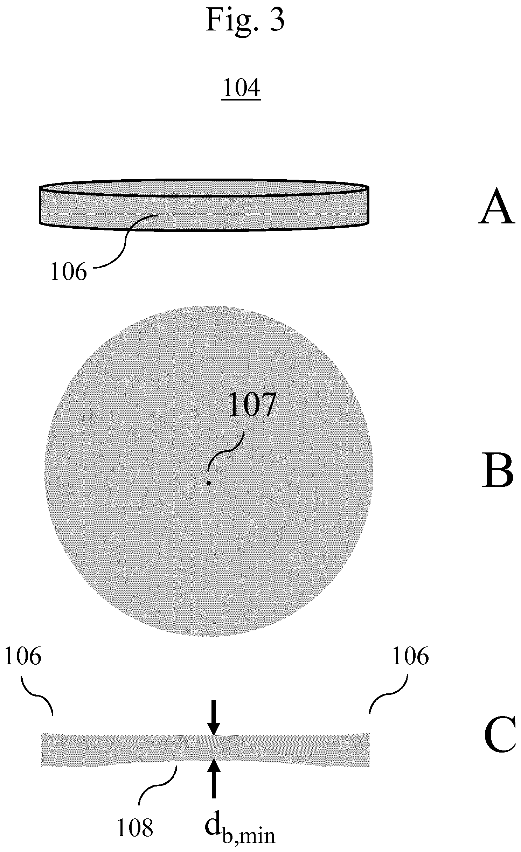

Figure 3 shows a glass bottom 104 from different perspectives, wherein the glass bottom 104 is a circular glass bottom. Figure 3A shows a schematic depiction of the glass bottom 104 and the outer area 106 of the glass bottom that in the glass container 100 according to the invention merges into the curved glass heel 105 (which then merges into the first end 102 of the glass tube 101). Figure 3B shows a top view of the glass bottom 104 with the centre 107. Figure 3C shows a cross-sectional view of the circular glass bottom 104. As shown in this figure, the thickness of the glass in the glass bottom 104 can vary with the area from the centre 107 towards the outer region 106. In the glass bottom 104 shown in figure 3C the thickness reaches its lowest point at the centre 107 of the glass bottom 104. As a consequence of the above described nature of the process of forming a glass bottom 104 and a curved glass heel 105 from a mother tube 101 the exterior surface of the glass bottom is not necessarily flat, but often has a concave indentation 108 as shown in figure 3C.

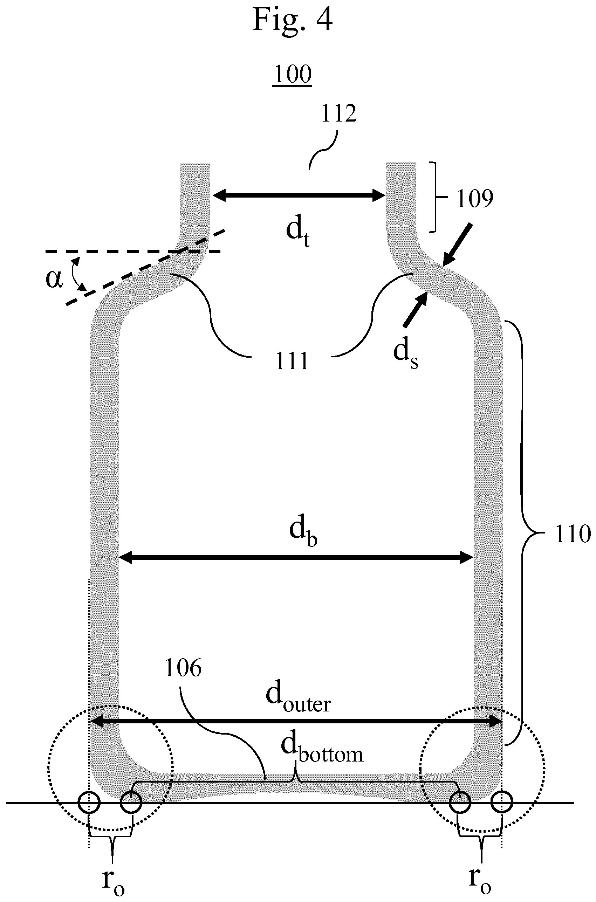

Figure 4 shows a cross sectional view of a further glass container 100 according to the invention. The glass container 100 comprises a top region 109 in which the inner diameter of the glass tube 101 is dₜ and a body region 110 in which the inner diameter of the glass tube 101 is d_{b} and in which the outer diameter is d_{c}, wherein d_{b} > dₜ. The glass container 100 further comprises a shoulder 111 that connects the body region 110 with the top region 109, wherein shoulder 111 is characterized by a shoulder angle α. At the top of the non-closed glass container 100 that is shown in this figure is an opening 112. The dotted circles at the bottom show the curved glass heel 105 of the glass container 100 according to the invention. The section covered by the dotted circles is shown in an enlarged view in figure 5. The glass container 100 comprises a circular bottom 106 that is characterized by a bottom diameter d_{bottom}, wherein d_{bottom}= dₒᵤₜₑᵣ - 2 × rₒ (dₒᵤₜₑᵣ corresponds to the outer diameter of the glass tube 101 measured at the first end 102 of the glass tube 101 and rₒ is the outer radius of the curved glass heel 105 measured by means of the approach shown in fig. 9A).

Figure 5 shows an enlarged view of the curved glass heel 105 in the glass container 100 according to the invention in which the inner and outer contour of the glass heel 105 are substantially circular arc-shaped. As can be seen, the structure of the curved glass heel 105 deviates from the structure of the curved glass heel in prior art containers that are shown in figure 2. The thickness of the glass dₕ in the area of the curved glass heel 105 has been increased and the outer radius rₒ has been reduced to ensure that a certain minimum value for the term dₕ³/(rₒ × d_{w}) is reached. Furthermore, the inner radius rᵢ also has been increased.

Figure 6 shows an enlarged view of a further curved glass heel 105 in a glass container 100 according to the invention in which the inner and outer contour of the glass heel 105 are substantially arc-shaped, but in which - contrary to the curved glass heel shown in figure 5 - the length of the circular arc at the outer surface of the curved glass heel is smaller than 2×π×rₒ/4. In this case rₒ does not correspond to the outer radius of the curved glass heel, but to width of the glass overhang in the area of the curved glass heel that is defined by the distance between points "C" and "D" (for the determination of ro see again figure 9A).

Figures 7A and 7B show in a side view and in a top view the localization of plane 113 in the glass container 100 that is used to determined rₒ, rᵢ and dₕ by means of the approaches that are shown in figures 8A, 8B, 9A and 9B. Plane 113 corresponds to the plane that is centrically located in the glass container and that comprises the longitudinal axis of the glass container (indicated by the dashed line in figure 7A), i. e. the axis that goes perpendicular through the centre of the bottom 107 (see figure 7B).

Figure 8A illustrates the determination of dₕ in a curved glass heel 105 in plane 113. For the determination of dₕ a tangent 116 that confines an angle of 45° with the ground-level bearing surface 115 is placed at the exterior surface of the curved glass heel 105. The point of the exterior surface of the curved glass heel 105 that comes into contact with the 45-tangent 116 is designated as "A" (see the lower circle in figure 8A). Next, a straight line 117 orthogonal to 45°-tangent 116 is guided through point "A". The position at which this straight orthogonal line 117 breaks through the interior side of the curved glass heel 105 is designated as "B" (see the upper circle figure 8A). dₕ corresponds to the distance between points "A" and "B".

Figure 8B shows curved glass heels 105 having a shape such that there are more than only one point of exterior surface of the curved glass heel 105 that comes into contact with the 45-tangent 116. In such a case point "A" corresponds to the point that is nearest to the outer surface of glass tube 101.

Figure 9A illustrates the determination of rₒ in a curved glass heel 105 in plane 113. For the determination of rₒ the intersection point of a first straight line 118 that forms an elongation of the exterior side of the glass tube 101 and the ground-level bearing surface 115 is determined. This intersection point is designated as "C" (see the left circle in figure 9A). Next, the point of the exterior surface of the glass container 100 that contacts the ground-level bearing surface 115 and that is closest to point "C" is determined. This intersection point is designated as "D" (see the right circle in figure 9A). rₒ corresponds to the distance between points "C" and "D".

Figure 9B illustrates the determination of rᵢ in a curved glass heel 105 in plane 113. For the determination of rᵢ a tangent 119 that confines and angle of 45° with the ground-level bearing surface 115 is placed at the interior surface of the curved glass heel 105. The point of the interior surface of the curved glass heel 105 that comes into contact with the 45-tangent 119 is designated as "E" (see the small circle in figure 9B). Next, the largest quarter circle 120 is determined that can be properly positioned on the inner contour of the curved glass heel 105, that comprises point "E" in the middle of the quarter circle and the ends of which do not extend into the mass of glass. rᵢ corresponds to the radius of the largest quarter circle 120.

If there are more than only one point of interior surface of the curved glass heel 105 that comes into contact with the 45°-tangent 119, point "E" corresponds to the geometric centre between points "P1" and "P2", wherein point "P1" is the point on the 45°-tangent 119 that comes into contact with the interior surface of the curved glass and that is located nearest to the glass tube 101 and point "P2" is the point on the 45°-tangent 119 that comes into contact with the interior surface of the curved glass heel 105 and that is located nearest to the glass bottom 104.

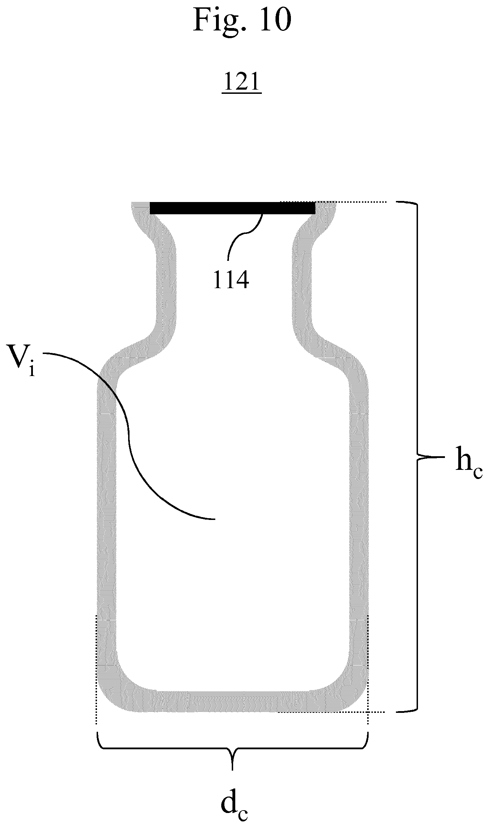

Figure 10 shows a closed glass container 121 according to the invention. In addition to the glass container 100 shown in figure 4 the closed glass container 121 further comprises a closure 114 that closes opening 112, wherein the closure 114 preferably is a lid, which is preferably joined to the glass container 100. The joining preferably comprises creating a form-fit of the glass container 100, preferably the flange of the glass container 100, with the closure 114. The form-fit is preferably created via a crimping step. As also shown in figure 9, the glass container 100 according to the invention is characterized by an interior volume Vᵢ, a height h_{c} (measured from the lowest point at the bottom of the glass container 100 to the highest point of the glass at the top of the glass container 100) and an outer diameter d_{c} of the container measured at the bottom end of the cylindrical part of the glass tube 101. The outer diameter d_{c} thus represents the outer diameter of the glass tube 101 in the preferred embodiment of the container according to the present invention.

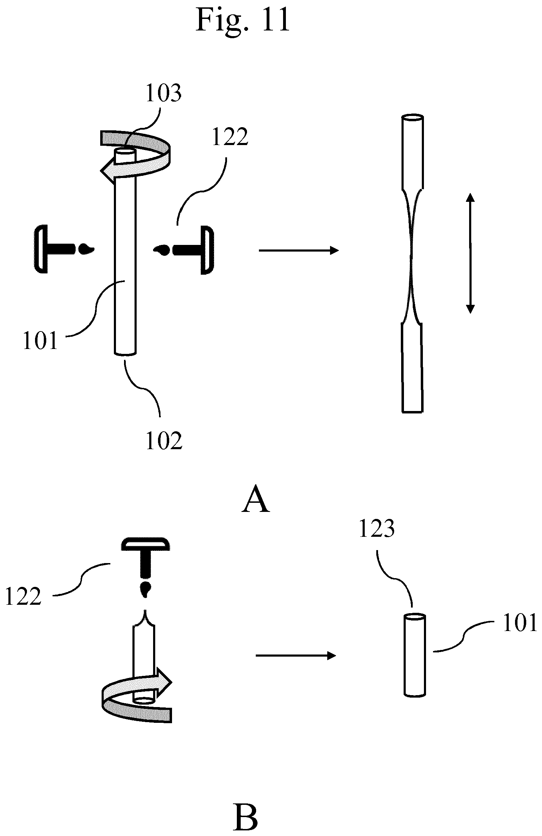

Figure 11 illustrates process 1 according to the invention for the preparation of a glass container 100. Figure 11A illustrates process step I), II) and III), wherein in process step I) a glass tube 101 with a first 102 and a further end 103 is provided, the glass tube having a wall thickness of d_{w} (not shown in figure 11A). In process step II), the glass tube is heated, while rotating around its major axis, to its softening point with a heating element (indicated by the candle flames shown on the left in figure 11A), preferably with a flame 122. In process step III) the heated glass tube is pulled along its major axis for stretching as shown on the right in figure 11A, thereby creating a container closure 123. In process step IV), depicted in figure 11B, container closure 123 is shaped to form a glass bottom 104 and a curved glass heel 105 (not shown in figure 11B) via which the glass bottom 104 is connected to the glass tube 101.

Figure 12A illustrates a sub-step in the formation of the desired shape of the curved glass heel 105 in a glass container 100 according to the present invention. For the formation of the desired shape of the curved glass heel 105 a glass container 100 that is fixed in an fixing element 126 of a rotary machine and that is continuously rotated around its longitudinal axis as shown in figure 12A is brought in an upward position with the glass bottom showing to the top. In a first sub-step, the glass bottom is heated with a burner 122 in which the peripheral zone (as indicated by the arrows at the top of figure 11A) is heated to a larger extend compared to the middle section so that the area in the peripheral zone of the glass bottom 104 (i. e. in an area indicated by the circles in figure 12A that comprises the curved glass heel and the part of the glass tube 101 that is in contact with the curved glass heel 105) are particularly heated. As a result, a melting of the glass bottom 104 even into the wall of the hitherto cylindrical glass tube 101 occurs so that the glass contracts slightly under the surface tension and the bottom slightly sinks (see Δl in figure 12A). This leads to an increased accumulation of glass in the peripheral zone 127 of the glass bottom 104 (indicated by the circles in figure 12A), compared to a prior art process in which the surface of the glass floor is heated evenly and only to such a degree as necessary to enable bottom forming. The additional mass of glass in the peripheral zone 127 of the glass bottom 104 thus arises from the hitherto cylindrical wall of the glass tube 101 which is adjacent to the glass heel 105.

Figure 12B illustrates a further sub-step in the formation of the shape of the curved glass heel 105 in a glass container 100 according to the present invention. In this sub-step the glass container 100 is still continuously rotated around its longitudinal axis and the glass bottom 101 is concavely pushed inward by a die 124, while at the same time an air flow from below pushes the bottom 101 against the die 124 so that it does not sink under gravity. At the same time a molding roller 125 is provided which predetermines the outer shape of the curved glass heel 105 and which prevents the glass mass accumulated in the peripheral zone 127 from escaping to the outside. Simultaneously, the air flow and the die 124 cause the bottom 101 and the peripheral zone 127 to cool down quickly until it these areas are no longer shapeable.

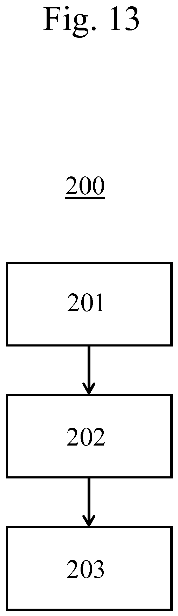

Figure 13 shows a flow chart of a process 200 according to the invention for packaging a pharmaceutical composition. In a process step a) 201, the glass container 100 according to figure 4 is provided. In a process step b) 202, a pharmaceutical composition is filled into the interior volume Vᵢ of the glass container 100, and in a process step c) 203 the opening 112 of the glass container 100 is closed, thereby obtaining the closed glass container 121 of figure 10.

### LIST OF REFERENCE NUMERALS

- **100**: glass container according to the invention
- **101**: glass tube
- **102**: first end of the glass tube 101
- **103**: further end of the glass tube 101
- **104**: glass bottom
- **105**: curved glass heel
- **106**: an outer area of the glass bottom
- **107**: centre of glass bottom
- **108**: concave indentation
- **109**: top region
- **110**: body region
- **111**: shoulder
- **112**: opening
- **113**: cross-sectional plane in the middle of the glass container 100
- **114**: closure
- **115**: ground-level bearing surface
- **116**: 45°-tangent at the exterior surface of the curved glass heel 105
- **117**: straight line orthogonal to 45°-tangent 116
- **118**: straight line forming an elongation of the glass tube 101
- **119**: 45°-tangent at the interior surface of the curved glass heel 105
- **120**: largest quarter circle
- **121**: closed glass container
- **122**: heating element, preferably a flame
- **123**: container closure
- **124**: die
- **125**: molding roller
- **126**: fixing element of a rotary machine
- **127**: peripheral zone of the glass bottom in which glass accumulates
- **200**: process according to the invention for packaging a pharmaceutical composition
- **201**: process step a)
- **202**: process step b)
- **203**: process step c)

## Claims

1. A glass container (100) comprising as container parts
i) a glass tube (101) with a first end (102) and a further end (103), the glass tube (101) having a wall thickness d_{w} and an outer diameter d_{c};
ii) a glass bottom (104), wherein the glass bottom (104) closes the glass tube (101) at the first end (102);
iii) a curved glass heel (105) extending from an outer area (106) of the glass bottom (104) to the first end (102) of the glass tube (101);
wherein the curved glass heel (105) is defined by an outer radius (rₒ), an inner radius (rᵢ) and a thickness of the glass (dₕ) in the curved glass heel (105);
wherein rᵢ is in the range from 0.7 to 3.0 mm;
wherein d_{w} is in the range from 0.7 to 1.8 mm;
wherein dₕ is in the range from 1.05 to 3.0 mm;
wherein d_{c} is in the range from 15 to 55 mm;
and wherein the following condition is fulfilled: $\left[100\times \left({{d}_{h}}^{3}\times {r}_{i}\right)/\left({d}_{w}\times {{d}_{c}}^{2}\right)\right] + \left(4.4 {mm}^{2}/{d}_{c}\right) > 0.75 mm .$

2. The glass container (100) according to claim 1, wherein the following condition is fulfilled: ${r}_{i} + {d}_{h} - {r}_{o} > 0 mm .$

3. The glass container (100) according to claim 1 or 2, wherein the glass tube (101) is a cylindrical glass tube and wherein the glass bottom (104) is a circular glass bottom.

4. The glass container (100) according to claim 3, wherein the circular glass bottom (104) has a thickness that varies within the area from the centre (107) of the circular glass bottom (104) to the outer area (106) of the circular glass bottom (104), wherein the minimum thickness of the circular glass bottom (104) is d_{b,min} and wherein the following condition is fulfilled: ${d}_{h} / {d}_{b , min} < 3.0 .$

5. The glass container (100) according to anyone of claims 1 to 4, wherein the glass container (100) comprises a coating that at least partially superimposes the exterior surface, the interior surface or the exterior and the interior surface of the glass tube (101).

6. The glass container (100) according to anyone of claims 1 to 5, wherein the glass container (100) is thermally tempered, chemically tempered or both.

7. The glass container (100) according to anyone of claims 1 to 6 wherein the glass container (100) comprises a top region (109) in which the inner diameter is dₜ and a body region (110) in which the inner diameter of the glass tube (101) is d_{b}, wherein d_{b} > dₜ and wherein the glass container (100) comprises a shoulder (111) that connects the body region (110) with the top region (109), wherein shoulder (111) is **characterized by** a shoulder angle α and wherein α is in the range from 10 to 70.

8. The glass container (100) according to claim 7, wherein throughout the body region (110) the wall thickness d_{w} of the glass tube (101) is in a range from ± 0.2 mm, based on a mean value of this wall thickness in the body region (110).

9. The glass container (100) according to anyone of claims 1 to 8, wherein the glass container (100) has an interior volume Vᵢ in the range from 2 to 150 ml.

10. The glass container (100) according to anyone of claims 1 to 9, wherein the glass is of a type selected from the group consisting of a borosilicate glass, an aluminosilicate glass, soda lime glass and fused silica.

11. A process for the preparation of a closed glass container (112) comprising as process steps
a) providing a glass container (100) according to anyone of claims 1 to 10;
b) inserting a pharmaceutical composition into the interior volume Vᵢ of the glass container (100); and
c) closing the glass container (100).

12. A closed glass container (120), obtainable by the process according to claim 11.

13. A use of the glass container (100) according to any of the claims 1 to 10 for packaging a pharmaceutical composition.

## Patentansprüche

1. Ein Glasbehälter (100) beinhaltend als Behälterteile
i) ein Glasrohr (101) mit einem ersten Ende (102) und einem weiteren Ende (103), wobei das Glasrohr (101) eine Wandstärke d_{w} und einen Außendurchmesser d_{c} aufweist;
ii) einen n Glasboden (104), wobei der Glasboden (104) das Glasrohr (101) am ersten Ende (102) verschließt;
iii) einen gekrümmten Glasabsatz (105), der sich von einem Außenbereich (106) des Glasbodens (104) bis zum ersten Ende (102) des Glasrohrs (101) erstreckt;
wobei der gekrümmte Glasabsatz (105) durch einen Außenradius (rₒ), einen Innenradius (rᵢ) und eine Dicke des Glases (dₕ) im gekrümmten Glasabsatz (105) definiert ist;
wobei rᵢ im Bereich von 0,7 bis 3,0 mm liegt;
wobei d_{w} im Bereich von 0,7 bis 1,8 mm liegt;
wobei dₕ im Bereich von 1,05 bis 3,0 mm liegt;
wobei d_{c} im Bereich von 15 bis 55 mm liegt;
und wobei die folgende Bedingung erfüllt ist: $\left[100\times \left({{d}_{h}}^{3}\times {r}_{i}\right)/\left({d}_{w}\times {{d}_{c}}^{2}\right)\right] + \left(4,4 {mm}^{2}/{d}_{c}\right) > 0 , 75 mm .$

2. Der Glasbehälter (100) nach Anspruch 1, wobei die folgende Bedingung erfüllt ist: ${r}_{i} + {d}_{h} - {r}_{o} > 0 mm .$

3. Der Glasbehälter (100) nach Anspruch 1 oder 2, wobei das Glasrohr (101) ein zylindrisches Glasrohr ist und wobei der Glasboden (104) ein kreisförmiger Glasboden ist.

4. Der Glasbehälter (100) nach Anspruch 3, wobei der kreisförmige Glasboden (104) eine Dicke aufweist, die innerhalb des Bereichs vom Mittelpunkt (107) des kreisförmigen Glasbodens (104) bis zum Außenbereich (106) des kreisförmigen Glasbodens (104) variiert, wobei die minimale Dicke des kreisförmigen Glasboden (104) d_{b,min}beträgt und wobei die folgende Bedingung erfüllt ist: ${d}_{h} / {d}_{b , min} < 3,0 .$

5. Der Glasbehälter (100) nach einem der Ansprüche 1 bis 4, wobei der Glasbehälter (100) eine Beschichtung aufweist, die die Außenfläche, die Innenfläche oder die Außen- und die Innenfläche des Glasrohrs (101) zumindest teilweise überdeckt.

6. Der Glasbehälter (100) nach einem der Ansprüche 1 bis 5, wobei der Glasbehälter (100) thermisch gehärtet, chemisch gehärtet oder beides ist.

7. Der Glasbehälter (100) gemäß einem der Ansprüche 1 bis 6, wobei der Glasbehälter (100) einen oberen Bereich (109), in dem der Innendurchmesser dt beträgt, und einen Körperbereich (110) aufweist, in dem der Innendurchmesser des Glasrohrs (101) d_{b} beträgt, wobei d_{b} > dt ist und wobei der Glasbehälter (100) eine Schulter (111) aufweist, die den Körperbereich (110) mit dem oberen Bereich (109) verbindet, wobei die Schulter (111) durch einen Schulterwinkel α gekennzeichnet ist und wobeiα im Bereich von 10 bis 70 liegt.

8. Der Glasbehälter (100) nach Anspruch 7, wobei im gesamten Körperbereich (110) die Wandstärke d_{w} des Glasrohrs (101) in einem Bereich von ± 0,2 mm liegt, bezogen auf einen Mittelwert dieser Wandstärke im Körperbereich (110).

9. Der Glasbehälter (100) nach einem der Ansprüche 1 bis 8, wobei der Glasbehälter (100) ein Innenvolumen Vᵢ im Bereich von 2 bis 150 ml aufweist.

10. Der Glasbehälter (100) nach einem der Ansprüche 1 bis 9, wobei das Glas aus einer Art besteht, die aus der Gruppe ausgewählt ist, die aus Borosilikatglas, Aluminosilikatglas, Kalk-Natron-Glas und Quarzglas besteht.

11. Ein Verfahren zur Herstellung eines geschlossenen Glasbehälters (112) beinhaltend als Verfahrensschritte
a) Bereitstellen eines Glasbehälters (100) gemäß einem der Ansprüche 1 bis 10;
b) Einbringen einer pharmazeutischen Zusammensetzung in das Innenvolumen Vᵢ des Glasbehälters (100); und
c) Verschließen des Glasbehälters (100).

12. Ein geschlossener Glasbehälter (120), der durch das Verfahren gemäß Anspruch 11 erhältlich ist.

13. Eine Verwendung des Glasbehälters (100) gemäß einem der Ansprüche 1 bis 10 zum Verpacken einer pharmazeutischen Zusammensetzung.

## Revendications

1. Un récipient en verre (100) comprenant, en tant que parties constitutives du récipient
i) un tube en verre (101) comportant une première extrémité (102) et une autre extrémité (103), le tube en verre (101) présentant une épaisseur de paroi d_{w} et un diamètre extérieur d_{c} ;
ii) un fond en verre (104), le fond en verre (104) fermant le tube en verre (101) au niveau de la première extrémité (102) ;
iii) un talon en verre incurvé (105) s'étendant depuis une zone extérieure (106) du fond en verre (104) jusqu'à la première extrémité (102) du tube en verre (101) ;
dans lequel le talon en verre incurvé (105) est défini par un rayon extérieur (rₒ), un rayon intérieur (rᵢ) et une épaisseur du verre (dₕ) dans le talon en verre incurvé (105) ;
dans lequel rᵢ est compris entre 0,7 et 3,0 mm ;
dans lequel d_{w} est compris entre 0,7 et 1,8 mm ;
dans lequel dₕ est compris entre 1,05 et 3,0 mm ;
dans lequel d_{c} est compris entre 15 et 55 mm ;
et dans lequel la condition suivante est remplie : $\left[100\times \left({{d}_{h}}^{3}\times {r}_{i}\right)/\left({d}_{w}\times {{d}_{c}}^{2}\right)+\left(4,4 {mm}^{2}/{d}_{c}\right)\right] > 0 , 75 mm .$

2. Le récipient en verre (100) selon la revendication 1, dans lequel la condition suivante est remplie : ${r}_{i} + {d}_{h} - {r}_{o} > 0 mm .$

3. Le récipient en verre (100) selon la revendication 1 ou 2, dans lequel le tube en verre (101) est un tube en verre cylindrique et dans lequel le fond en verre (104) est un fond en verre circulaire.

4. Le récipient en verre (100) selon la revendication 3, dans lequel le fond en verre circulaire (104) présente une épaisseur qui varie dans la zone allant du centre (107) du fond en verre circulaire (104) à la zone extérieure (106) du fond en verre circulaire (104), l'épaisseur minimale e du fond en verre circulaire (104) étant d_{b,min} et dans lequel la condition suivante est remplie : ${d}_{h} / {d}_{b , min} < 3,0 .$

5. Le récipient en verre (100) selon l'une quelconque des revendications 1 à 4, dans lequel le récipient en verre (100) comprend un revêtement qui recouvre au moins partiellement la surface extérieure, la surface intérieure ou les surfaces extérieure et intérieure du tube en verre (101).

6. Le récipient en verre (100) selon l'une quelconque des revendications 1 à 5, dans lequel le récipient en verre (100) est trempé thermiquement, trempé chimiquement ou les deux.

7. Le récipient en verre (100) selon l'une quelconque des revendications 1 à 6, dans lequel le récipient en verre (100) comprend une région supérieure (109) dans laquelle le diamètre intérieur est dₜ et une région de corps (110) dans laquelle le diamètre intérieur du tube en verre (101) est d_{b}, dans lequel d_{b} > dₜ et dans lequel le récipient en verre (100) comprend un épaulement (111) qui relie la partie corps (110) à la partie supérieure (109), l'épaulement (111) étant **caractérisé par** un angle d'épaulement α et l'α se situant dans la plage de 10 à 70.

8. Le récipient en verre (100) selon la revendication 7, dans lequel, sur l'ensemble de la partie corps (110), l'épaisseur de paroi d_{w} du tube en verre (101) est comprise dans une plage de ± 0,2 mm, par rapport à une valeur moyenne de cette épaisseur de paroi dans la partie corps (110).

9. Le récipient en verre (100) selon l'une quelconque des revendications 1 à 8, dans lequel le récipient en verre (100) présente un volume intérieur Vᵢ compris entre 2 et 150 ml.

10. Le récipient en verre (100) selon l'une quelconque des revendications 1 à 9, dans lequel le verre est d'un type choisi parmi le groupe constitué d'un verre borosilicaté, d'un verre aluminosilicaté, d'un verre sodocalcique et de silice fondue.

11. Un procédé de préparation d'un récipient en verre fermé (112) comprenant les étapes suivantes
a) fournir un récipient en verre (100) selon l'une quelconque des revendications 1 à 10 ;
b) l'introduction d'une composition pharmaceutique dans le volume intérieur Vᵢdu récipient en verre (100) ; et
c) fermer le récipient en verre (100).

12. Un récipient en verre fermé (120), pouvant être obtenu par le procédé selon la revendication 11.

13. Une utilisation du récipient en verre (100) selon l'une quelconque des revendications 1 à 10 pour le conditionnement d'une composition pharmaceutique.
